# EUROPEAN PATENT APPLICATION

(11) **EP 4 852 518 A1**
(43) Date of publication of application: **09.12.2026**
(21) Application number: 24934456.5
(22) Date of filing: 09.04.2024
(51) Int. Cl.: H04W 36/00

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LIN, Xue, Dongguan, Guangdong 523860 (CN); YOU, Xin, Dongguan, Guangdong 523860 (CN)
(74) Representative: Grassi, Stefano
(86) International application number: PCT/CN2024/086894
(87) International publication number: WO 2025/213372

(57) **Abstract**

Provided are a wireless communication method and a communication device. The method comprises: a terminal device receives one or more count values sent by a first master node, wherein the one or more count values are used for determining a secondary key when the terminal device performs a first handover procedure, the secondary key is used for communication between the terminal device and a secondary node, and the first handover procedure is an MCG LTM procedure.

## Description

### TECHNICAL FIELD

The present disclosure relates to the field of communications, and more particularly to, a method for wireless communication and a communication device.

### BACKGROUND

In a Dual Connection (DC) scenario, some communication systems (e.g., New Radio (NR) systems) support Master Cell Group Layer 1 (L1)/Layer 2 (L2) Triggered Mobility (MCG LTM). How to better support the MCG LTM procedure is a problem required to be solved.

### SUMMARY

The present disclosure provides a method for wireless communication and a communication device. Hereinafter, various aspects related to the present disclosure are described in detail.

In a first aspect, there is provided a method for wireless communication including a following operation. A terminal device receives one or more counters transmitted by a first master node.

The one or more counters are used for determining a secondary key when the terminal device performs a first handover procedure, the secondary key is used by the terminal device to communicate with a secondary node, and the first handover procedure is an MCG LTM procedure.

In a second aspect, there is provided a method for wireless communication including a following operation. A first master node transmits one or more counters to a terminal device. The one or more counters are used for determining a secondary key when the terminal device performs a first handover procedure, the secondary key is used by the terminal device to communicate with a secondary node, and the first handover procedure is an MCG LTM procedure.

In a third aspect, there is provided a method for wireless communication including a following operation. A second master node transmits a first message to a first master node. The first master node is a source master node when a terminal device performs a first handover procedure, the second master node is a master node to which at least one candidate cell associated with the first handover procedure belongs, the first message includes at least one counter, and the at least one counter is used for determining a secondary key associated with the at least one candidate cell. The secondary key is used by the terminal device to communicates with a secondary node, and the first handover procedure is an MCG LTM procedure.

In a fourth aspect, there is provided a method for wireless communication including a following operation. A secondary node receives one or more secondary keys transmitted by a second master node. The one or more secondary keys are associated with at least one candidate cell under the second master node, or the one or more secondary keys are associated with a target cell under the second master node. The secondary keys is used by the terminal device to communicate with the secondary node after performing a first handover procedure, the second master node is a master node to which the at least one candidate cell belongs, and the first handover procedure is an MCG LTM procedure.

In a fifth aspect, there is provided a communication device. The communication device is a terminal device and includes a receiving unit. The receiving unit is configured to receive one or more counters transmitted by a first master node. The one or more counters are used for determining a secondary key when the terminal device performs a first handover procedure, the secondary key is used by the terminal device to communicate with a secondary node, and the first handover procedure is an MCG LTM procedure.

In a sixth aspect, there is provided a communication device. The communication device is a first master node and includes a first transmitting unit. The first transmitting unit is configured to transmit one or more counters to a terminal device. The one or more counters are used for determining a secondary key when the terminal device performs a first handover procedure, the secondary key is used by the terminal device to communicate with a secondary node, and the first handover procedure is an MCG LTM procedure.

In a seventh aspect, there is provided a communication device. The communication device is a second master node and includes a first transmitting unit. The first transmitting unit is configured to transmit a first message to a first master node. The first master node is a source master node when a terminal device performs a first handover procedure, the second master node is a master node to which at least one candidate cell associated with the first handover procedure belongs, the first message includes at least one counter, and the at least one counter is used for determining a secondary key associated with the at least one candidate cell. The secondary key is used by the terminal device to communicates with a secondary node, and the first handover procedure is an MCG LTM procedure.

In a seventh aspect, there is provided a communication device. The communication device is a secondary node and includes a first receiving unit. The first receiving unit is configured to receive one or more secondary keys transmitted by a second master node. The one or more secondary keys are associated with at least one candidate cell under the second master node, or the one or more secondary keys are associated with a target cell under the second master node. The secondary keys are used by the terminal device to communicate with the secondary node after performing a first handover procedure, the second master node is a master node to which the at least one candidate cell belongs, and the first handover procedure is an MCG LTM procedure.

In a ninth aspect, there is provided a communication device including a processor, a memory and a communication interface. The memory is configured to store one or more computer programs. The processor is configured to invoke the computer programs in the memory, to enable the communication device to perform some of or all operations of the methods in the aforementioned various aspects.

In a tenth aspect, an embodiment of the present disclosure provides a communication system. The system includes the aforementioned communication device. In another possible design, the system may further include other devices that interact with the communication device in the solutions provided by the embodiments of the present disclosure.

In an eleventh aspect, an embodiment of the present disclosure provides a computer-readable storage medium. The computer-readable storage medium stores a computer program that causes a computer to perform some of or all operations of the method in each of the aforementioned aspects.

In a twelfth aspect, an embodiment of the present disclosure provides a computer program product. The computer program product includes a non-transitory computer-readable storage medium storing a computer program. The computer program is operable to cause a computer to perform some of or all operations of the method in each of the aforementioned aspects. In some implementations, the computer program product may be a software installation package.

In a thirteenth aspect, an embodiment of the present disclosure provides a chip including a memory and a processor. The processor invokes and executes a computer program from the memory, to implement some of or all operations of the method in each of the aforementioned aspects.

In the embodiments of the present disclosure, when the terminal device performs the MCG LTM procedure, the terminal device may determine the secondary key based on one or more counters transmitted by the first master node, thereby saving signaling overhead.

### BRIEF DESCRIPTION OF THE DRAWINGS

FIG. 1 is an example diagram of a system architecture of a wireless communication system to which an embodiment of the present disclosure is applied.
FIG. 2 is a schematic diagram of an LTM procedure.
FIG. 3 is a schematic diagram of key derivation during an Xn handover procedure.
FIG. 4 is a schematic diagram of key update during an Xn handover procedure.
FIG. 5 is a schematic diagram of a networking mode of a control plane in a dual connection scenario.
FIG. 6 is a schematic diagram of a user plane protocol stack at a network device side in a dual connection scenario.
FIG. 7 is a schematic diagram of a user plane protocol stack at a terminal device side in a dual connection scenario.
FIG. 8 is a schematic diagram of an implementation procedure of a security mechanism during a secondary node addition/modification procedure.
FIG. 9 is a schematic flowchart of a method for wireless communication according to an embodiment of the present disclosure.
FIG. 10 is a schematic flowchart of a method for wireless communication according to another embodiment of the present disclosure.
FIG. 11 is a schematic flowchart of a method for wireless communication according to yet another embodiment of the present disclosure.
FIG. 12 is a schematic structural diagram of a communication device according to an embodiment of the present disclosure.
FIG. 13 is a schematic structural diagram of a communication device according to another embodiment of the present disclosure.
FIG. 14 is a schematic structural diagram of a communication device according to yet another embodiment of the present disclosure.
FIG. 15 is a schematic structural diagram of a communication device according to yet another embodiment of the present disclosure.
FIG. 16 is a schematic structural diagram of a communication device according to an embodiment of the present disclosure.

### DETAILED DESCRIPTION

### Architecture of a communication system

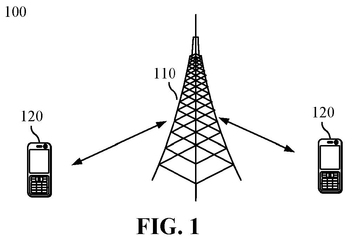

FIG. 1 is an example diagram of a system architecture of a wireless communication system 100 to which an embodiment of the present disclosure is applied. The wireless communication system 100 includes a network device 110 and a terminal device 120. The network device 110 may be a device that communicates with the terminal device 120. The network device 110 may provide communication coverage for a particular geographic area and may communicate with terminal devices 120 located within the coverage.

FIG. 1 exemplarily illustrates one network device and two terminal devices. Optionally, the wireless communication system 100 may include multiple network devices, and another number of terminal devices may be included in the coverage of each network device, which is not limited in the embodiments of the present disclosure.

Optionally, the wireless communication system 100 may also include other network entities, such as, network controllers, mobility management entities, etc., which are not limited by the embodiments of the present disclosure.

It is to be understood that the technical solutions of the embodiments of the present disclosure may be applied to various communication systems, such as: a 5th Generation (5G) system or a New Radio (NR), a Long Term Evolution (LTE) system, an LTE Frequency Division Duplex (FDD) system, an LTE Time Division Duplex (TDD), etc. The technical solutions provided by the present disclosure may also be applied to future communication systems, such as, a 6th generation mobile communication system, a satellite communication system, etc.

The terminal device in the embodiments of the present disclosure may also be referred to as User Equipment (UE), an access terminal, a user unit, a user station, a mobile platform, a Mobile Station (MS), a Mobile Terminal (MT), a remote station, a remote terminal, a mobile device, a user terminal, a terminal, a wireless communication device, a user agent or a user device, etc. The terminal device in the embodiments of the present disclosure may be a device that provides voice and/or data connectivity to a user, and may be used to connect people, objects and machines, such as a handheld device with wireless connection function, a vehicle-mounted device, etc. The terminal device in the embodiments of the present disclosure may be a mobile phone, a Pad, a notebook computer, a palmtop computer, a Mobile Internet Device (MID), a wearable device, a Virtual Reality (VR) device, a Augmented Reality (AR) device, a wireless terminal in industrial control, a wireless terminal in self driving, a wireless terminal in remote medical surgery, a wireless terminal in smart grid, a wireless terminal in transportation safety, a wireless terminal in smart city, or a wireless terminal in smart home, etc. Optionally, the UE may be used to act as a base station. For example, the UE may act as a scheduling entity that provides sidelink signal(s) between UEs in the V2X, the D2D or the like. For example, a cellular phone communicates with a car by using the sidelink signal(s). The cellular phone communicates with the device in smart home without relaying communication signal(s) by the base station.

The network device in the embodiments of the present disclosure may be a device configured to communicate with a terminal device, and the network device may also be referred to as an access network device or a radio access network device, for example, the network device may be a base station. The network device in the embodiments of the present disclosure may refer to a Radio Access Network (RAN) node (or device) that accesses a terminal device to a wireless network. The base station may broadly cover or be replaced with following names, such as, Node B (NodeB), evolved NodeB (eNB), next generation NodeB (gNB), relay station, Transmitting and Receiving Point (TRP), Transmitting Point (TP), Master eNB (MeNB), Secondary eNB (SeNB), Multi-standard Radio (MSR) node, home base station, network controller, access node, wireless node, Access Point (AP), transmission node, transceiver node, Base Band Unit (BBU), Remote Radio Unit (RRU), Active Antenna Unit (AAU), Remote Radio Head (RRH), Central Unit (CU), Distributed Unit (DU), positioning node, etc. The base station may be a macro base station, a micro base station, a relay node, a donor node or a combination thereof. The base station may also be a communication module, a modem or a chip provided inside the device or apparatus. The base station may also be a mobile switching center and a device that undertakes a function of the base station in D2D communication, Vehicle-to-Everything (V2X) communication, Machine-to-Machine (M2M) communication, a device in network side in a 6G network, a device that undertakes a function of the base station in a future communication system, etc. The base station may support networks with the same technology or different access technologies. The specific technology and the specific device form adopted by the network device are not limited in the embodiments of the present disclosure.

The base station may be fixed or mobile. For example, a helicopter or unmanned aerial vehicle may be configured to act as a mobile base station, and one or more cells may be moved according to the location of the mobile base station. In other examples, the helicopter or unmanned aerial vehicle may be configured to function as a device that communicates with another base station.

In some deployments, the network device in the embodiments of the present disclosure may be a CU or a DU, or the network device may include a CU and a DU. The gNB may also include an AAU.

The network device and the terminal device may be deployed on land, and include indoor or outdoor device, hand-held device, or vehicle-mounted device. The network device and the terminal device may also be deployed on the water. The network device and the terminal device may also be deployed in airplanes, in balloons and in satellites in the air. The scenario where the network device and the terminal device are located is not limited in the embodiment of the present disclosure.

It is also to be understood that all or part of the functions of the communication device in the present disclosure may also be implemented by software functions running on the hardware or by virtualized functions instantiated on a platform (e.g., a cloud platform).

### LTM

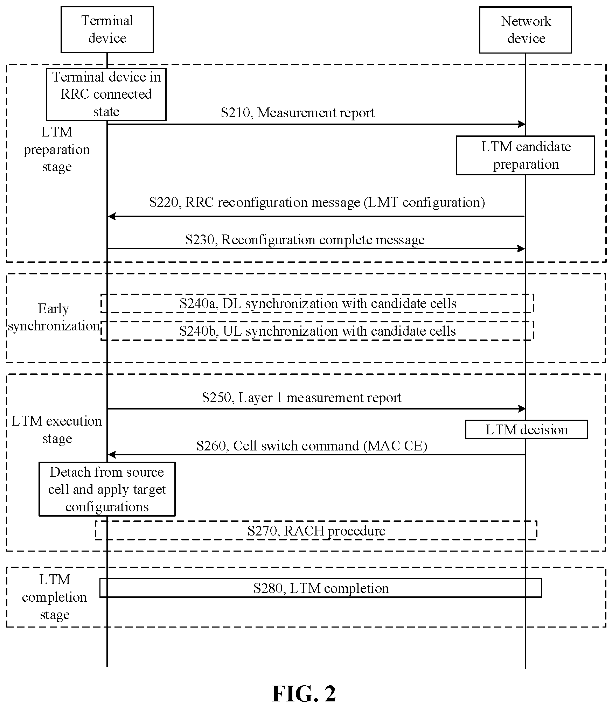

In order to further shorten handover latency and ensure service continuity, the 3rd Generation Partnership Project (3GPP) supports the LTM. For ease of understanding, the LTM procedure is introduced in conjunction with FIG. 2.

As shown in FIG. 2, the LTM procedure may include an LTM preparation stage, an LTM execution stage and an LTM completion stage.

The operation S210 and operation S230 in FIG. 2 belong to the LTM preparation stage.

In operation S210, a terminal device reports a measurement result to a network device. The measurement result may be a layer 3 measurement result. Then, the network device may determine to initiate the LTM procedure based on the measurement result reported by the terminal device; and trigger the candidate cell preparation.

In operation S220, the network device transmits a Radio Resource Control (RRC) message including the LTM configuration (or referred to as LTM candidate configuration) to the terminal device. For example, the network device may transmit an RRC reconfiguration message to the terminal device, to indicate the LTM configuration. The LTM configuration transmitted by the network device to the terminal device may include configurations of one or more candidate cells. After receiving the LTM configuration, the terminal device may store the LTM configuration indicated by the network device.

In operation S230, the terminal device transmits an RRC reconfiguration complete message to the network device.

In some embodiments, with reference to operation S240a and operation S240b, after the terminal device completes the LTM preparation stage, the terminal device may perform uplink/downlink synchronization with the candidate cells in advance, to shorten the interrupt latency in the handover procedure.

The operation S250, operation S260 and operation S270 (optional) in FIG. 2 belong to the LTM execution stage.

In operation S250, the terminal device performs layer 1 measurement on each candidate cell, and reports the layer 1 measurement results to the network device. After receiving the layer 1 measurement results reported by the terminal device, the network device may determine a target cell based on the layer 1 measurement results.

In operation S260, the network device transmits a cell handover command to the terminal device, to instruct the terminal device to switch to the target cell. For example, the network device may instruct the terminal device to switch to the target cell through a Medium Access Control Control Element (MAC CE). After receiving the cell handover command, the terminal device may detach from the source cell and apply the configuration of the target cell.

In some embodiments, if the terminal device currently does not have a valid Timing Advance (TA) or transmission configuration indicator (TCI) state identifier of the target cell, the terminal device may further perform operation S270 at the LTM execution stage. In operation S270, the terminal device initiates a random access procedure to the target cell.

The operation S280 in FIG. 2 belongs to the LTM completion stage. In operation S280, the terminal device indicates the LTM completion. For example, the terminal device may transmit, to the target cell, information indicating that the LTM has been successfully completed.

### Key derivation during the Xn handover procedure

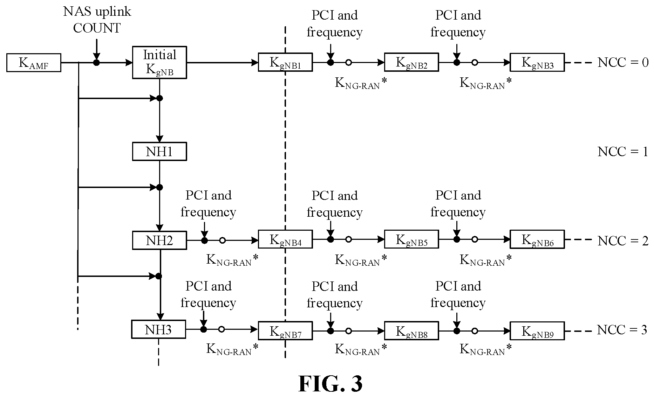

In order to ensure communication security, the key derivation is usually performed during the Xn handover procedure to ensure that data transmission is performed safely between the terminal device and an Access and Mobility Management Function (AMF) network element. Both the terminal device and the network device (e.g. gNB) need to perform the key derivation to ensure the security of the data transmission. With reference to FIG. 3, the key derivation procedure is introduced by taking the key derivation at the network device side as an example. The key derivation manner at the terminal device side is similar to the key derivation manner at the network device side, and is not repeated later.

As shown in FIG. 3, if a value of a Next Hop Chaining Count (NCC) does not change, the gNB performs horizontal derivation to update the key K_{gNB}. If the value of the NCC changes, the AMF network element performs vertical derivation to update a Next Hop (NH) parameter. Whether the value of NCC changes may depend on the state of the terminal device. For example, if the terminal device needs to perform the handover, the value of NCC is updated by adding 1.

For convenience of description, the value of the NCC being x may be denoted as NCCx. For example, the value of the NCC being 0 may be denoted as NCC0, the value of the NCC being 1 may be denoted as NCC1, and so on. The initial NH parameter is denoted as NH0, and a NH parameter obtained by the x-th vertical derivation may be denoted as NHx, such as NH1, NH2, NH3, etc., and so on.

For the horizontal derivation, taking the NCC0 as an example, the gNB may derive an initial key K_{gNB} based on the key K_{AMF} and the Non- Access Stratum (NAS) uplink count. The initial key K_{gNB} is used as the NH0. The NH0 is associated with the NCC0, they are used as a pair {NH, NCC}. If the horizontal derivation is required to performed, the gNB may generate a key K_{NG-RAN*} based on the initial key K_{gNB} (denoted as the key K_{gNB1}), a Physical Cell Identifier (PCI) of a cell where the terminal device currently resides, and a frequency (e.g., a downlink (DL) frequency); and use the K_{NG-RAN*} as the key K_{gNB2}. The key K_{gNB2} may be used for deriving a key used for data integrity protection and encryption. If the horizontal derivation is continued, the gNB may derive the key K_{gNB3} according to the key K_{gNB2}, the PCI of the cell where the terminal device currently resides and the frequency. The key K_{gNB3} may be used for deriving a new key used for the data integrity protection and encryption, and so on, thereby iteratively updating the key K_{gNB} to ensure the communication security.

For the vertical derivation, if the value of the NCC increases from NCC0 to NCC1, the AMF network element performs the vertical derivation, to derive NH1 according to the key K_{AMF} and the NH0. The NH1 is associated with the NCC1, and they are used as a new pair {NH, NCC} used by the AMF network element to perform the horizontal derivation on the basis of the NCC1. If the NCC1 is updated to NCC2, the AMF network element continues to perform the vertical derivation, to derive NH2 according to the key K_{AMF} and the NH1. The NH2 is associated with the NCC2, and they are used as a new pair {NH, NCC} used by the AMF network element to perform the horizontal derivation on the basis of the NCC2; and so on.

### Key update during the Xn handover procedure

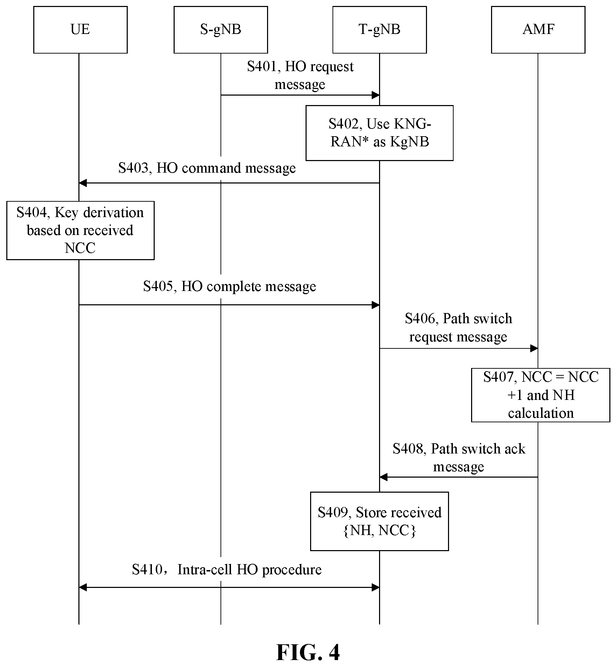

In order to ensure the communication security, on the basis of the aforementioned key derivation, the key update may be performed for the Xn handover procedure. Taking K_{gNB} being a key used by a source base station (S-gNB) and K_{NG-RAN*} being a key used by a target base station (T-gNB) as an example, the key update flow is described in detail with reference to FIG. 4.

With reference to FIG. 4, in operation S401, the S-gNB transmits a Handover (HO) request message to the T-gNB. The HO request message includes information such as a derived key K_{NG-RAN*}, the NCC and security algorithms of the S-gNB.

In operation S402, the T-gNB uses the key K_{NG-RAN*} as the key K_{gNB} currently used by the target base station, and associates the NCC with the K_{gNB}.

In operation S403, the T-gNB transmits a HO command message to the terminal device (UE). The HO command message includes information such as the NCC and the security algorithms.

In operation S404, the UE performs the key derivation based on the received NCC, to acquire the key K_{gNB*} used by the UE.

In operation S405, if the UE successfully accesses the target cell, the UE transmits a HO complete message to the T-gNB to indicate that the handover is completed.

In operation S406, after receiving the HO complete message transmitted by the UE, the T-gNB transmits a path switch request message to the AMF.

In operation S407, after receiving the path switch request message, the AMF may update the NCC as NCC +1 (NCC = NCC + 1), and perform NH calculation, and they are used as a new pair {NH, NCC}.

In operation S408, the AMF transmits a path switch Acknowledgment (ack) message to the T-gNB. The path switch ack message includes the updated {NH, NCC} in operation S407.

In operation S409, the T-gNB stores the received {NH, NCC} for further handover.

In operation S410, the UE may perform an intra-cell HO procedure on candidate cells of the T-gNB.

It is to be noted that, in the aforementioned key update flow, the source base station may perform the following operations.

K_{NG-RAN*} is generated based on a target PCI and a target downlink frequency. For example, if there is an unused {NH, NCC}, the key may be derived based on the NH. If there is no unused {NH, NCC}, the key is derived based on K_{gNB}.

The generated K_{NG-RAN*} and the corresponding NCC are forwarded to the target base station.

It is to be noted that, in the aforementioned key update flow, the target base station may perform the following operations.

The target base station may use the received K_{NG-RAN*} as the K_{gNB} for communication with the terminal device; associates the K_{gNB} with an NCC; include the NCC in the handover command and transmits it to the terminal device via the source base station; and after the handover is completed, the target base station transmits a path switch request to the AMF.

It is to be noted that, in the aforementioned key update flow, the terminal device may perform the following operations.

If the NCC in the handover command and the NCC associated with the current K_{gNB} have the same value, the K_{gNB*} is generated based on the K_{gNB}, the target cell PCI and the downlink frequency.

If the NCC in the handover command and the NCC associated with the current K_{gNB} have different values, the NH is generated based on the KAMF, and then the K_{gNB*} is generated based on the NH, the target cell PCI and the downlink frequency.

The UE communicates with the target base station using the generated K_{gNB*}.

### Dual connection communication scenario

The methods provided by the embodiments of the present disclosure may be used in various DC architectures. For example, a dual connection between the 4G communication system and the 5G communication system, a dual connection between the 5G communication system and the 4G communication system, a dual connection between the 5G communication system and the 5G communication system, or a dual connection between the 5G communication system and a future communication system, and the like. Herein, the 5G communication system may also be referred to as an NR system. However, it is to be understood that the methods provided by the embodiments of the present disclosure are not limited to be applied to the DC architecture, and may also be applied to other system architectures, e.g., a single connection architecture.

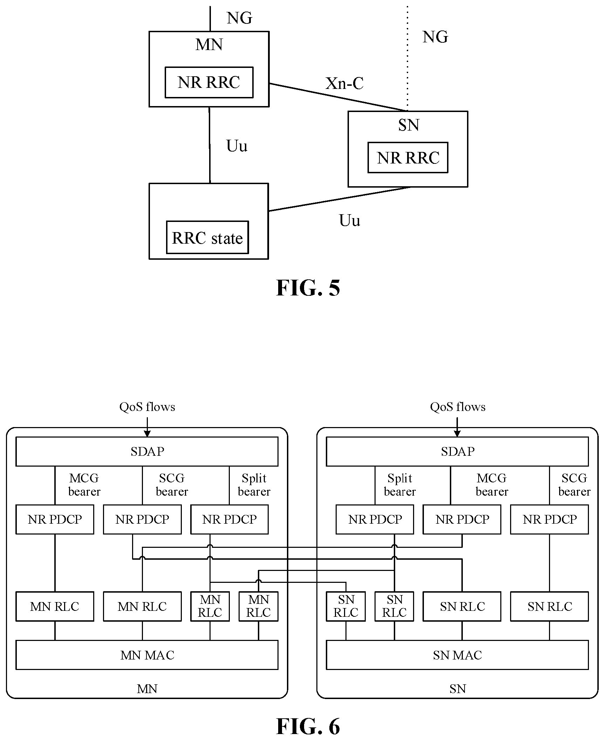

In the DC architecture, one terminal device may simultaneously connect to two cell sets. One of the two cell sets is referred to as a Master Cell Group (MCG). The MCG at least includes one primary cell (PCell), and optionally, the MCG may also include at least one Secondary Cell (SCell). Another cell set to which the terminal device is connected is referred to as a Secondary Cell Group (SCG). The SCG includes at least one Primary Secondary Cell (PSCell), and optionally, the SCG may further include at least one SCell. It is to be noted that since all cells included in the MCG are usually deployed in one node, in many scenarios, the node corresponding to the MCG may also be referred to as a Master Node (MN). Since all cells included in the SCG are usually deployed in one node, in many scenarios, the node corresponding to the SCG may also be referred to as a Secondary Node (SN). The dual connection architecture of NR-DC is shown in FIG. 5. The terminal device is connected and communicates with both the MN and SN, the MN is connected to the SN through an Xn interface, the MN is connected to a core network device through an NG interface, and optionally, the SN is also connected to the core network device through the NG interface.

It is to be noted that the master node, as an "anchor point", is responsible for interacting with the core network for control plane data. In some implementations, the terminal device may interact with the two network nodes for the control plane data and user plane data. For the control plane, the terminal device may establish a signaling connection of Signaling Radio Bearer 0 (SRB0), SRB1 and SRB2 with the MN, and may also establish a signaling connection of SRB3 with the SN.

In addition, various access network devices in the DC have different Radio Link Control (RLC) /Medium Access Control (MAC) entities. Based on different nodes where the data is located in the RLC/MAC entity of the access network device, the Data Radio Bearer (DRB) is classified into the following bearer types: an MCG bearer, an SCG bearer and a split bearer (also referred to as a branch bearer or a division bearer).

As shown in FIG. 6, the MCG bearer means that the RLC/MAC entity of the DRB is located only in the master node. For example, the MN receives Quality of Service (QoS) flows from the core network, and if data in the QoS flows is service data corresponding to the MCG bearer, the MN transmits the data processed by a Packet Data Convergence Protocol (PDCP) entity of the MN to the RLC entity and the MAC entity of the MN for processing. For another example, the SN receives the QoS flows from the core network, if the data in the QoS flows is service data corresponding to the MCG bearer, the SN transmits the data processed by the PDCP entity of the SN to the MN through an interface (for example, the Xn interface, an X2 interface, or an F1 interface) between the MN and the SN, and then the RLC entity and the MAC entity of the MN further processes the data.

With continued reference to FIG. 6, the SCG bearer means that the RLC/MAC entity of the DRB is located only in the secondary node. For example, the MN receives the QoS flows from the core network, if the data in the QoS flows is service data corresponding to the SCG bearer, the MN transmits the data processed by the PDCP entity of the MN to the SN through an interface (for example, the Xn interface, an X2 interface, or an F1 interface) between the MN and the SN; and then the RLC entity and the MAC entity of the SN further processes the data. For another example, the SN receives the QoS flows from the core network, and if data in the QoS flows is service data corresponding to the SCG bearer, the SN transmits the data processed by a PDCP entity of the SN to the RLC entity and the MAC entity of the SN for processing.

The split bearer means that the RLC/MAC entity of the DRB exists in both the master node and the secondary node. For example, after the MN receives the service data corresponding to the split bearer from the core network, the MN transmits a part of data processed by the PDCP entity of the MN to the RLC entity and the MAC entity of the SN through an interface (for example, the Xn interface, the X2 interface or the F1 interface) between the MN and the SN; and transmits the other part of the data or the same data to the RLC entity and the MAC entity of the MN, so that the RLC/MAC entity of the MN and the RLC/MAC entity of the SN simultaneously process the data. For example, after the SN receives the service data corresponding to the split bearer from the core network, the SN transmits a part of data processed by the PDCP entity of the SN to the RLC entity and the MAC entity of the MN through an interface (for example, the Xn interface, the X2 interface or the F1 interface) between the MN and the SN; and transmits the other part of the data or the same data to the RLC entity and the MAC entity of the SN, so that the RLC/MAC entity of the MN and the RLC/MAC entity of the SN simultaneously process the data.

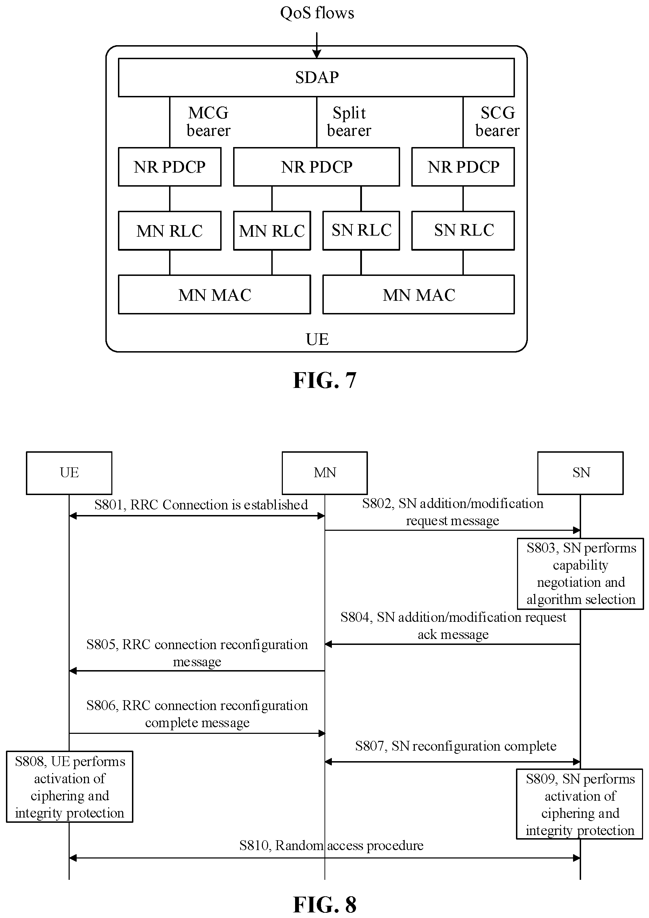

It is to be noted that there is no problem of distinguishing between different nodes within the terminal device, but it is still necessary to distinguish between MCG and SCG due to the role problem of the cell group. The main difference between the MCG and the SCG comes from the protocol layers of different radio bearer convergences (i.e., the differences between the RLC and the MAC), as shown in FIG. 7.

### Security mechanism during a SN addition/modification procedure

For radio bearers with different types, the processing of the PDCP layer and a layer higher than the PDCP layer may be at the MN or the SN. For the radio bearer of the PDCP layer at the SN side, input factors for generating the ciphering/integrity protection key include the key (K_{gNB}) at the MN side and the SN counter value. The SN counter is maintained by the MN side, and may be maintained in a monotonically increasing manner, for example. The SN and the UE do not need to store the SN counter. The security mechanism during the SN addition/modification procedure is described below in detail with reference to FIG. 8.

As shown in FIG. 8, in operation S801, an RRC connection is established between the UE and the MN.

In operation S802, the MN transmits an SN addition/modification request message to the SN. The request message includes K_{SN}, UE security capabilities, and a User Plane (UP) security policy.

It is to be understood that before the MN transmits the SN addition/modification request to the SN, the MN may generate the K_{SN} according to the K_{gNB} and the SN counter.

In operation S803, the SN performs capability negotiation and algorithm selection.

In operation S804, the SN transmits an SN addition/modification request ack message to the MN. The ack message includes the algorithms selected by the SN.

In operation S805, the MN transmits an RRC connection reconfiguration message to the UE. The reconfiguration message includes the SN Counter and the selected algorithms.

In some implementations, the UE may generate the K_{SN} according to the K_{gNB} and the SN counter.

In operation S806, the UE transmits an RRC connection reconfiguration complete message to the MN.

In operation S807, the MN communicates with the SN to determine that the SN reconfiguration is complete.

In operation S808, the UE performs activation of ciphering and integrity protection.

In operation S809, the SN performs the activation of ciphering and integrity protection.

In operation S810, the UE performs a random access procedure in the SN cell.

It is to be noted that in 3GPP release 18 (R18), the scenario supported by the LTM includes only the intra-CU LTM. Furthermore, in order to avoid the complex radio bearer processing flow caused by performing the cell handover in the DC scenario (for example, the change of bearer termination may be involved in the cell handover in the DC scenario, and correspondingly, it is necessary to perform a reestablishment operation on the PDCP/RLC entity of the radio bearer), following limitations also exist for the R18 LTM: the SCG is required to be released when the MCG LTM is performed; and the SCG LTM is performed without MN involvement.

It is to be noted that, in 3GPP release 19 (R19), the scenario supported by the LTM is extended, and for example, the LTM may support inter-CU LTM. Furthermore, the case when CU is acting as the MN is prioritized when the DC is not configured. As secondary priority, the case when NR-DC is configured and CU is acting as SN and MCG is unchanged is supported. As secondary priority, the case when NR-DC is configured, CU is acting as MN and SCG is unchanged or SCG is released is supported.

In some communication systems, the design of the LTM (e.g., the inter-CU LTM and the intra-CU LTM) needs to take into account the signaling overhead of the LTM procedure.

In some MCG LTM (e.g., the inter-CU MCG LTM and the intra-CU MCG LTM) procedures, the terminal device may need to communicate with the secondary node using a secondary key. In this case, how to determine the secondary key when the MCG LTM is performed is a problem required to be solved. Then, when the secondary key is determined, it is also necessary to consider the problem of the signaling overhead.

In view of the aforementioned problems, in the embodiments of the present disclosure, when the terminal device performs the MCG LTM procedure, the terminal device may determine the secondary key based on one or more counters transmitted by the first master node, thereby saving signaling overhead.

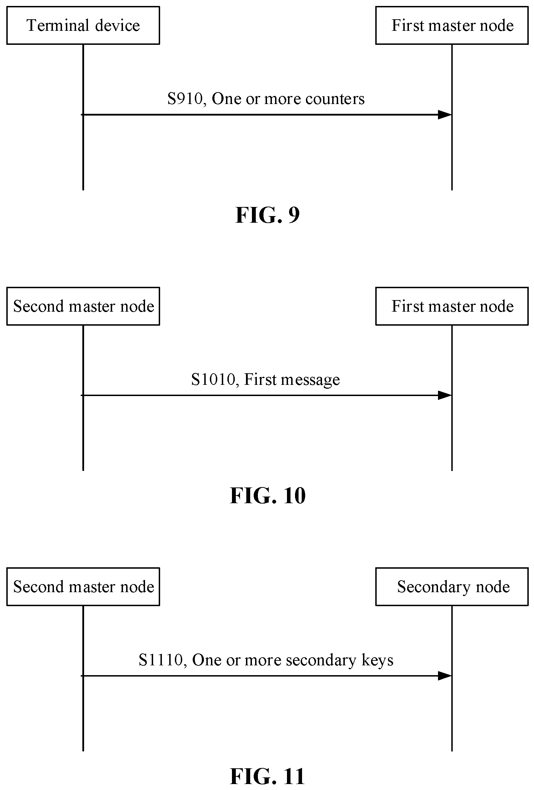

FIG. 9 is a schematic flowchart of a method for wireless communication according to an embodiment of the present disclosure. The method shown in FIG. 9 is described from the perspective of the terminal device and the first master node. The terminal device mentioned herein may be, for example, the terminal device 120 shown in FIG. 1. The first master node mentioned herein may be a source master node (S-MN), and for example, the first master node may be a gNB or an eNB.

With reference to FIG. 9, in operation S910, the terminal device receives one or more counters transmitted by the first master node, where the one or more counters are used for determining a secondary key when the terminal device performs a first handover procedure, the secondary key is used by the terminal device to communicate with a secondary node, and the first handover procedure is an MCG LTM procedure.

It is to be noted that the determination of the secondary key may refer to the determination of the secondary key for the first time, or may refer to the subsequent update of the secondary key.

In the embodiments of the present disclosure, the one or more counters may be secondary key-counter(s) (sk-counter).

In some implementations, if the first master node is the gNB, the secondary key may be referred to as S-K_{gNB}; and if the first master node is the eNB, the secondary key may be referred to as S-K_{eNB}.

In some implementations, the first handover procedure may be used for performing the cell handover within the CU (i.e., the first handover procedure is the intra-CU MCG LTM); or performing the cell handover between CUs (i.e., the first handover procedure is the inter-CU MCG LTM).

In the embodiments of the present disclosure, the aforementioned method for determining the secondary key may also be applied to a scenario where the SCG is not released. For example, during the first handover procedure, the scenario where the SCG is not released may include any one of: remaining unchanged (remaining a current SCG); being changed to other SCG(s) other than the current SCG; or being added with other SCG(s) other than the current SCG. Since the SCG is not required to be released, the signaling overhead caused by repeatedly providing the SCG configuration can be saved.

In some implementations, after the terminal device receives the one or more counters transmitted by the first master node, the terminal device further determines the secondary key based on a master key and a target counter. Herein, the target counter is a counter among the one or more counters. For example, the target counter may be a counter corresponding to a target cell among one or more counters, or the target counter may be a counter corresponding to a master node to which the target cell belongs among one or more counters. In other embodiments, the target counter may also be a counter corresponding to one or more candidate cells.

In other embodiments, the terminal device may generate a master key before the terminal device determines the secondary key based on the master key and the target counter.

In some implementations, after the terminal device receives the one or more counters transmitted by the first master node, the terminal device may perform a target operation. The target operation mentioned herein may include one or more of: reestablishing or newly establishing a PDCP entity for the first bearer; reestablishing or newly establishing a RLC entity for the first bearer; reestablishing or newly establishing a PDCP entity for a second bearer; reestablishing or newly establishing a RLC entity for a second bearer; deleting a PDCP entity corresponding to a third bearer; deleting a RLC entity corresponding to a third bearer; discarding a PDCP Service Data Unit (SDU) (i.e., a PDCP SDU discard operation is performed) for a signaling radio bearer (e.g., SRB1, SRB2, etc.) The first bearer is a bearer using the master key (i.e., a bearer with KeyToUse configured as master), and the second bearer is a bearer using a secondary key (i.e., a bearer with KeyToUse configured as secondary). In addition, the third bearer meets that configuration information of the third bearer is included in configuration information of a source cell, and the configuration information of the third bearer is excluded from configuration information of a target cell.

In some implementations, the target operation is performed in a case where a first condition is met, and the first condition includes that the master key is required to be updated and/or a PDCP termination point changes. For example, the target operation includes reestablishing or newly establishing a PDCP entity for the first bearer; and/or reestablishing or newly establishing a RLC entity for the first bearer. In this case, the target operation is performed in a case where a first condition is met, and the first condition includes that the master key is required to be updated and/or a PDCP termination point changes.

It is to be noted that the method of determining the secondary key may also be applied to a scenario where the LTM candidate cell configuration is not released. Since the LTM candidate cell configuration is reserved by the terminal device to support the terminal device to perform continuous cell handover, the signaling overhead caused by repeatedly providing the LTM candidate cell configuration can be saved.

The manner of bearing the one or more counters is not specifically limited in the embodiments of the present disclosure, and in some implementations, the one or more counters may be carried in a handover command. The handover command is used for instructing the terminal device to switch to the target cell (the target cell may refer to a cell to which the terminal device is about to access) in the first handover procedure. The handover command may be an LTM cell switch command. The handover command may be carried in the MAC CE, so the handover command may sometimes also be referred to as an LTM cell switch MAC CE. It is to be understood that since the data amount of the one or more counters is relatively small, when the one or more counters are carried in the handover command during the first handover procedure, it helps to save the signaling overhead.

In other implementations, the one or more counters are carried in first configuration information (e.g., the LMT configuration information). The first configuration information includes configuration information of one or more candidate cells, and the configuration information of the one or more candidate cells is used by the terminal device to perform the first handover procedure. It is to be understood that for example, the one or more counters may be included in the LTM candidate cell configuration. Since the LTM candidate cell configuration may be reserved by the terminal device to support the terminal device to perform continuous cell handover, by including the one or more counters in the LTM candidate cell configuration, repeated configuration of the one or more counters can be avoided, thereby saving the signaling overhead. The manners of bearing the counters are introduced below in detail in combination with an example.

### The counters are carried in the handover command.

In some implementations, when it is determined that the counters of the secondary key are carried in the handover command, the handover command may include one counter (e.g., a target counter). For example, the one or more counters include a target counter, and the target counter corresponds to the target cell or the target counter corresponds to a master node to which the target cell belongs.

In the embodiments of the present disclosure, when the counter is carried in the handover command, the second master node may transmit at least one counter to the first master node, to determine the secondary key associated with the at least one candidate cell. A detailed description is given below with reference to FIG. 10. It is to be noted that the method shown in FIG. 10 is described from the perspective of the first master node and the second master node. The first master node mentioned herein may be, for example, the first master node shown in FIG. 9. The second master node mentioned herein may be a candidate master node (C-MN), i.e., a master node to which at least one candidate cell belongs. For example, the second master node may be a gNB or an eNB.

With reference to FIG. 10, in operation S1010, the second master node transmits a first message to the first master node. The first master node is a source master node when a terminal device performs a first handover procedure, the second master node is a master node to which at least one candidate cell associated with the first handover procedure belongs, the first message includes at least one counter, the at least one counter is used for determining a secondary key associated with the at least one candidate cell, and the first handover procedure is an MCG LTM procedure.

In some implementations, each candidate cell under the second master node corresponds to one counter; or all candidate cells under the second master node correspond to one counter; or the first message includes a counter corresponding to a target cell under the second master node.

For example, if four MCG LTM candidate cells are included under the second master node, the first message includes a counter (sk-counter) corresponding to each candidate cell. In this implementation, the counters are configured in the granularity of MCG LTM candidate cells (each MCG LTM candidate cell corresponds to one counter).

For another example, if four LTM candidate cells are included under the second master node, the first message includes one counter, i.e., all the candidate cells under the second master node correspond to the same counter. In this implementation, the configuration granularity of the counters is per second master node (each C-MN corresponds to one counter).

In some implementations, before the first master node receives the first message transmitted by the second master node, the method further includes: the first master node transmits a second message to the second master node, where the second message is used for requesting the second master node to provide one or more of: a counter for each candidate cell under the second master node; counter for all candidate cells under the second master node, where the all candidate cells correspond to one counter; or a counter for a target cell.

In some implementations, the second message includes information of a target cell. For example, the information of the target cell may be the target cell PCI, the target cell ID, or the like.

In some implementations, the second message is transmitted during the LTM preparation stage in the first handover procedure; or the second message is transmitted in response to the terminal device successfully accessing the first master node (i.e., the terminal device successfully accesses the current first master node from another MN); or the second message is transmitted after the first master node determines the target cell and before transmitting the handover command.

In some implementations, the second message is transmitted after the first master node determines the target cell and before transmitting the handover command, which includes: the second message is transmitted after a Central Unit (CU) of the first master node receives second indication information transmitted by a Distributed Unit (DU) of the first master node, where the second indication information includes information of the target cell.

In some implementations, after the first master node receives the first message transmitted by the second master node, the method further includes: the CU of the first master node transmits the at least one counter to a DU of the first master node.

In some implementations, the DU of the first master node is one of the following DUs: a current DU of the terminal device; a DU where the target cell is located, where the first handover procedure is configured to perform inter-DU handover within the CU; or all DUs including the candidate cell under the first master node.

For example, the CU of the first master node transmits the at least one counter to the current DU of the terminal device.

For another example, when the first handover procedure is configured to perform inter-DU handover within the CU, the CU of the first master node may transmit at least one counter to the DU where the target cell is located.

For another example, the CU of the first master node may transmit at least one counter to all DUs including the candidate cell under the first master node.

In some implementations, the handover command is transmitted in a case where the target cell does not belong to the first master node.

In some implementations, the DU of the first master node may determine whether the target cell and the current serving cell belong to the same master node or the same cell group. If the target cell and the current serving cell do not belong to the same master node or the same cell group, the DU of the first master node may include the counter associated with the target cell/the master node to which the target cell belongs in the handover command.

In some implementations, the DU of the first master node may transmit third indication information to the CU of the first master node, where the third indication information includes information of the target cell. The DU of the first master node receives feedback information for the third indication information transmitted by the CU of the first master node, and the feedback information includes one of: a counter corresponding to the target cell; or a counter corresponding to a master node to which the target cell belongs. In other embodiments, the feedback information may further include counter(s) corresponding to one or more candidate cells.

In some implementations, the third indication information is transmitted in a case where the target cell does not belong to the first master node.

### The counters are carried in the first configuration information.

In the embodiments of the present disclosure, one or more counters may be configured in the first configuration information (e.g., the LTM Config). The configuration granularity of the counters is introduced in detail below.

In some implementations, the counter may be configured according to the granularity of the candidate master node or candidate cell group. For example, each candidate master node corresponds to one counter, or each candidate master node corresponds to one counter set (the counter set may be, for example, a counter set list). For another example, each candidate cell group corresponds to one counter, or each candidate cell group corresponds to one counter set. It is to be understood that each candidate cell may correspond to one candidate cell group identifier or one candidate master node identifier, and the terminal device may determine the counter based on the master node or cell group to which the target cell belongs.

In some implementations, the counter may be configured according to the granularity of the candidate cell. For example, each candidate cell corresponds to one counter. For another example, configuration information of each candidate cell includes one counter.

In some implementations, the counter may be configured according to the granularity of all candidate cells. For example, all candidate cells correspond to one counter, i.e., all candidate cells correspond to the same counter.

In some implementations, the first configuration information may include configuration information of the MCG and/or configuration information of the SCG. In other implementations, the first configuration information further includes one or more of: identifier(s) of the one or more candidate cells; or an identifier of a cell group corresponding to the one or more candidate cells.

In some implementations, the configuration information of the SCG includes one or more of: configuration information of a source SCG; or configuration information of another SCG other than the configuration information of the source SCG.

In some implementations, the terminal device may determine the secondary key according to a target counter among the one or more counters. The target counter mentioned herein may meet one of the following conditions: corresponding to a target cell among the one or more candidate cells; corresponding to a master node to which the target cell belongs; belonging to a first counter set, where the first counter set corresponds to the master node to which the target cell belongs (i.e., each master node corresponds to one count value set); belonging to a second counter set, where the second counter set corresponds to the target cell (i.e., each candidate cell corresponds to one counter set); being included in configuration information of the target cell; or being a counter corresponding to one or more candidate cells, and all of the one or more candidate cells correspond to one counter. Accordingly, the target counter may be determined in the following manner: selecting a counter corresponding to a target cell among the one or more candidate cells; selecting a counter corresponding to a master node to which the target cell belongs; selecting an unused counter from the first counter set corresponding to the master node to which the target cell belongs; selecting an unused counter from the second counter set corresponding to the target cell; applying a counter in the target cell configuration information; applying a counter corresponding to one or more candidate cells, and all of the one or more candidate cells correspond to one counter.

In some implementations, the terminal device transmits a RRC reconfiguration complete message to the target cell. The RRC reconfiguration complete message includes the target counter. In this way, it is possible to maintain that the terminal device side and the network device have the consistent target counter, thereby helping to improve the reliability and security of the data transmission.

In some implementations, when the counter is carried in the first configuration information, the handover command transmitted during the first handover procedure may include the first indication information. The first indication information is used for indicating one or more of: the terminal device needs to update a master key; or the terminal device needs to update the secondary key.

As an example, for example, the first indication information is 1 bit, and when the first indication information is 1, it represents that the terminal device needs to perform the key update. In an implementation, the first indication information of 1 bit may be used for instructing the terminal device to update the master key (e.g., K_{gNB}) and the secondary key (e.g., S-K_{gNB}). In another implementation, the first indication information of 1 bit may also be used for instructing the terminal device to update only the secondary key (e.g., S-K_{gNB}).

In the embodiments of the present disclosure, when the counter is carried in the first configuration information, the first master node may receive at least one counter transmitted by the second master node, to determine the secondary key associated with the at least one candidate cell. With reference to FIG. 10 again, the first master node receives a first message transmitted by a second master node, where the second master node is a master node to which at least one candidate cell belongs, the first message includes at least one counter, and the at least one counter is used for determining a secondary key associated with the at least one candidate cell.

In some implementations, each candidate cell under the second master node corresponds to one counter; or all candidate cells under the second master node correspond to one counter; or the first message includes a counter corresponding to a target cell under the second master node.

For example, if four MCG LTM candidate cells are included under the second master node, the first message includes a counter (sk-counter) corresponding to each candidate cell. In this implementation, the counters are configured in the granularity of MCG LTM candidate cells (each MCG LTM candidate cell corresponds to one counter).

For another example, if four LTM candidate cells are included under the second master node, the first message includes one counter, i.e., all the candidate cells under the second master node correspond to the same counter. In this implementation, the configuration granularity of the counters is per second master node (each C-MN corresponds to one counter).

In some implementations, before the first master node receives the first message transmitted by the second master node, the method further includes: the first master node transmits a second message to the second master node, where the second message is used for requesting the second master node to provide one or more of: a counter for each candidate cell under the second master node; counter for all candidate cells under the second master node, where the all candidate cells correspond to one counter; or a counter for a target cell.

In some implementations, the second message is transmitted during the LTM preparation stage in the first handover procedure; or the second message is transmitted in response to the terminal device successfully accessing the first master node.

In some implementations, the at least one counter may be used for updating the secondary key associated with the MCG LTM candidate cell. The secondary key may be a key of the secondary node, a key of a primary secondary cell (PSCell), or a key of a secondary cell group. It is to be understood that the SN/PSCell/SCG may be a source SN/PSCell/SCG or another SN/PSCell/SCG.

It is to be understood that if the configuration granularities of the counters are different, then, the manners where the CU of the first master node transmits the counter to the DU may be different. For example, if all candidate cells correspond to one counter, the CU of the first master node may transmit the one counter to the DU of the first master node. For another example, if each candidate master node/candidate cell group corresponds to one counter, the CU of the first master node may transmit, to the DU of the first master node, at least one counter and information of the candidate master node or master cell group corresponding to the at least one counter. For another example, if each candidate cell/target cell corresponds to one counter, the CU of the first master node may transmit, to the DU of the first master node, at least one counter and information (e.g., the cell ID) of one or more candidate cells/target cell corresponding to the at least one counter.

In some implementations, after the second master node transmits the first message to the first master node, the method further includes: the second master node receives a third message transmitted by the first master node. The third message includes one of: a master key associated with the at least one candidate cell; or a master key associated with a target cell among the at least one candidate cell.

In some implementations, the second master node determines the secondary key associated with the at least one candidate cell based on the master key associated with the at least one candidate cell and the at least one counter. The second master node transmits the secondary key associated with the at least one candidate cell to the secondary node.

In some implementations, the second master node determines the secondary key associated with the target cell based on the master key associated with the target cell and a counter corresponding to the target cell. The second master node transmits the secondary key associated with the target cell to the secondary node. The counter corresponding to the target cell may be a counter among the aforementioned at least one counter.

In some implementations, each candidate cell under the second master node corresponds to one counter; or all candidate cells under the second master node correspond to one counter.

In some implementations, before the first master node receives the first message transmitted by the second master node, the method further includes: the first master node transmits a second message to the second master node. The second message is used for requesting the second master node to provide counter(s) of candidate cell(s) under the second master node (e.g., a counter corresponding to each candidate cell or a counter corresponding to all cells that correspond to one counter).

It is to be noted that one or more counters in the embodiments of the present disclosure may be configured in the candidate cell list or may be configured outside the candidate cell list. When the counters are configured outside the candidate cell list, as an example, the counters may be configured in the LTM-config information element. The specific configuration manner is as follows.

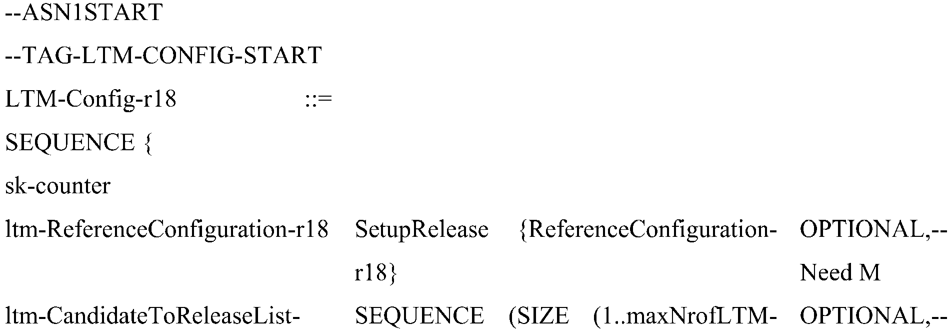

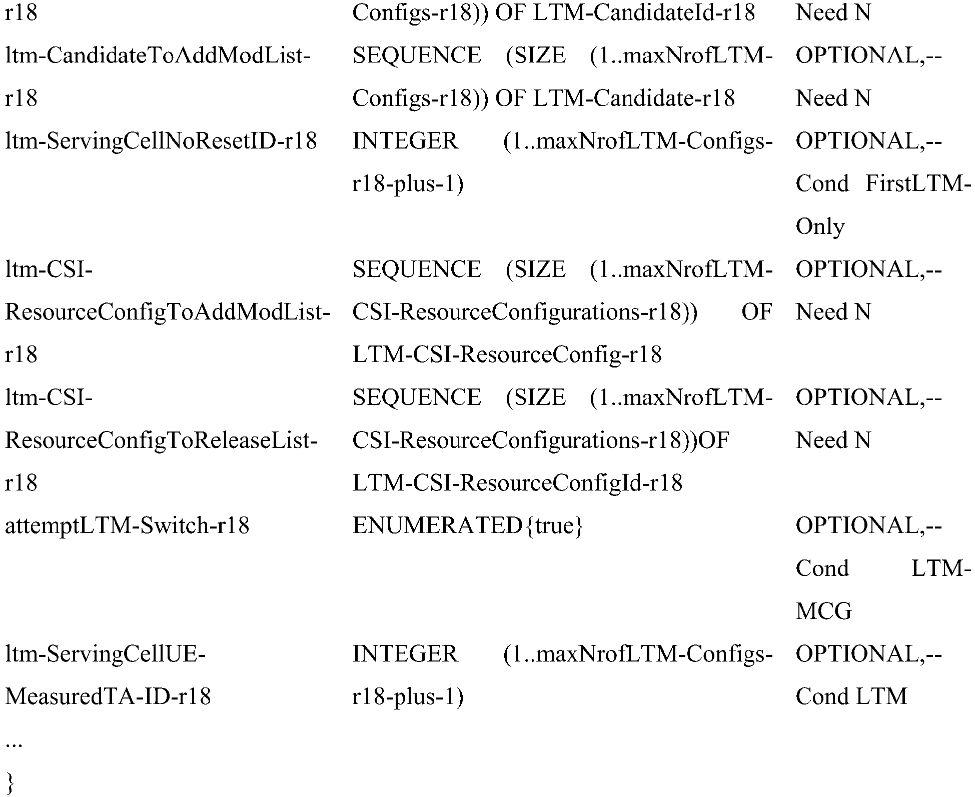

FIG. 11 is a schematic flowchart of a method for wireless communication according to yet another embodiment of the present disclosure. The method shown in FIG. 11 is described from the perspective of the second master node and the secondary node. The second master node mentioned herein may be, for example, the second master node shown in FIG. 10. The secondary node mentioned herein may be a gNB or an eNB.

With reference to FIG. 11, in operation S1110, the secondary node receives one or more secondary keys transmitted by the second master node. The one or more secondary keys are associated with at least one candidate cell under the second master node, or the one or more secondary keys are associated with a target cell under the second master node. The secondary keys is used by the terminal device to communicate with the secondary node after performing a first handover procedure, the second master node is a master node to which the at least one candidate cell belongs, and the first handover procedure is an MCG LTM procedure.

In some implementations, the second master node may firstly transmit the secondary key corresponding to the at least one candidate cell to the secondary node. After the terminal device successfully accesses the second master node or the second master node receives an indication from the secondary node, the second master node transmits fourth indication information to the secondary node, where the fourth indication information is used for instructing the secondary node to use a target secondary key among the secondary keys associated with the at least one candidate cell.

In some implementations, after the terminal device successfully accesses the second master node or the second master node receives the indication from the secondary node, the second master node transmits fifth indication information to the secondary node, where the third indication information includes a secondary key corresponding to the target cell.

The method for wireless communication in the present disclosure is described in more detail below with reference to specific examples. It is to be noted that the following examples are merely intended to help those skilled in the art understand the embodiments of the present disclosure, and are not intended to limit the embodiments of the present disclosure to illustrated specific numerical values or specific scenarios. Various equivalent modifications or variations are apparent to those skilled in the art from the examples given, and such modifications or variations are also within the scope of the embodiments of the present disclosure.

### First example

In the first example, the counter (sk-counter) is carried in a handover command (the LTM cell switch command). In the first example, the method for wireless communication in the present disclosure is described in detail in view of the network side and the terminal device (i.e., UE) side. The network side includes a candidate master node (C-MN), a source master node (S-MN), and the like.

### Network side

In the first example, the method for wireless communication at the network side may include operation 1.01 to operation 1.06.

In operation 1.01, the C-MN transmits a first message to the S-MN, where the first message includes: sk-counter(s) associated with at least one candidate cell.

For example, four MCG LTM candidate cells are included under the C-MN, the first message includes the sk-counter corresponding to each candidate cell. In this implementation, the configuration granularity of the sk-counter is per MCG LTM candidate cell.

For another example, four LTM candidate cells are included under the C-MN, the first message includes one sk-counter, i.e., all the candidate cells under the C-MN correspond to the same sk-counter. In this implementation, the configuration granularity of the sk-counter is per C-MN.

For another example, the first message includes the sk-counter corresponding to the target cell, and the information of the target cell is included in the second message.

In some implementations, the sk-counter is used for updating the key of the SN/PSCell/SCG associated with the MCG LTM candidate cells, and the associated SN/PSCell/SCG may be the source SN/PSCell/SCG or another SN/PSCell/SCG.

In operation 1.02, based on operation 1.01, the C-MN receives a second message transmitted by the S-MN before transmitting the first message to the S-MN. The second message is used for requesting the C-MN to provide the sk-counter configuration. Optionally, the second message further includes information target cell, for example, target cell PCI/target cell ID, and the like.

In operation 1.03, based on operation 1.02, the time stages for the S-MN to transmit the second message to the C-MN include a) to c).
a) The LTM preparation stage.
b) The UE successfully accesses the current MN from another MN.
c) Before the LTM is triggered. For example, the S-MN-DU determines a target cell based on the L1 measurement result reported by the UE, and transmits second indication information to the S-MN-CU. The second indication information includes information of the target cell, for example, the target cell ID. After receiving the second indication information, the S-MN-CU transmits a second message to the C-MN corresponding to the target cell. In another implementation, the S-MN-DU determines whether the target cell and the current serving cell belong to the same MN/cell group. if the target cell and the current serving cell do not belong to the same MN/cell group, the S-MN-DU transmits the second indication information to the S-MN-CU.

In operation 1.04, based on operation 1.01, after receiving the first message, the S-MN-CU transmits the sk-counter, or transmits the sk-counter+candidate/target cell ID or the sk-counter+candidate cell group information (which correspond to three different configuration granularities in operation 1.01) to the S-MN-DU.

For example, the S-MN-CU transmits the sk-counter configuration to the current serving DU. Optionally, when intra-CU inter-DU LTM occurs in the UE, the S-MN-CU transmits the sk-counter configuration to the target DU.

For another example, the S-MN-CU transmits the sk-counter configuration to all DUs configured with LTM candidate cells under the S-MN.

In operation 1.05, based on operation 1.04, the S-MN-DU determines whether the target cell and the current serving cell belong to the same MN/cell group. If the target cell and the current serving cell do not belong to the same MN/cell group, the S-MN-DU includes an sk-counter associated with the target cell/MN to which the target cell belongs in the LTM cell switch MAC CE.

In operation 1.06, based on operation 1.01, the S-MN-DU transmits third indication information to the S-MN-CU. The third indication information at least includes a candidate cell ID corresponding to the target cell. The S-MN-CU determines, based on the third indication information, whether to update the sk-counter/sk-counter associated with the target cell, and transmits feedback information to the S-MN-DU. Optionally, the S-MN-DU determines whether the target cell and the current serving cell belong to the same MN/cell group. If the target cell and the current serving cell do not belong to the same MN/cell group not, the S-MN-DU transmits the third indication information to the S-MN-CU. If the feedback information includes the sk-counter, the S-MN-DU includes the sk-counter associated with the target cell/MN to which the target cell belongs in the LTM cell switch MAC CE.

### UE side

In the first example, the method for wireless communication at the UE side may include operation 1.11.

In operation 1.11, the UE receives the LTM cell switch MAC CE. If the LTM cell switch MAC CE includes the sk-counter, the behaviors of the UE include following (1) to (6).
(1) The K_{gNB} of the target cell is generated, and the S-K_{gNB} is updated based on the K_{gNB} of the target cell and the received sk-counter.
(2) The S-K_{gNB} is updated based on the K_{gNB} and the received sk-counter.
(3) A PDCP/RLC entity is reestablished or newly established for the bearer with the KeyToUse configured as master. Optionally, the corresponding behavior is performed when the master key is required to be updated; or the corresponding behavior is required to be performed when the PDCP termination point changes.
(4) A PDCP/RLC entity is reestablished or newly established for the bearer with the KeyToUse configured as secondary.
(5) The PDCP/RLC entity corresponding to the first bearer is deleted, where the first bearer is included in the source configuration but is excluded from the target configuration.
(6) The PDCP SDU discard is performed for the SRB. Furthermore, the PDCP SDU discard is performed based on the indication of the network, and the SRB is SRB1/SRB2.

### Second example

In the second example, the counter (sk-counter) is carried in the LTM configuration information. In the second example, the method for wireless communication in the present disclosure is described in detail in view of the network side and the terminal device (UE) side. The network side includes a candidate master node (C-MN) and a source master node (S-MN).

### Network side

In the second example, the method for wireless communication at the network side may include operation 2.01 to operation 2.03.

In operation 2.01, the S-MN transmits the LTM configuration to the UE, and the LTM configuration at least includes following a) to c).
a) A candidate cell configuration/candidate cell ID(s).
b) An ID of a cell group corresponding to candidate cells.
c) A sk-counter configuration:
   i, each candidate cell group is associated with an sk-counter or a list of SK-counters;
   ii, each candidate cell is associated with one sk-counter, optionally, the sk-counter is included in each candidate cell configuration; and
   iii, sk-counter. In an implementation, the sk-counter is configured outside the candidate cell list.

In some implementations, the LTM configuration information may be an LTM-config information element, and the LTM configuration information may include following contents.

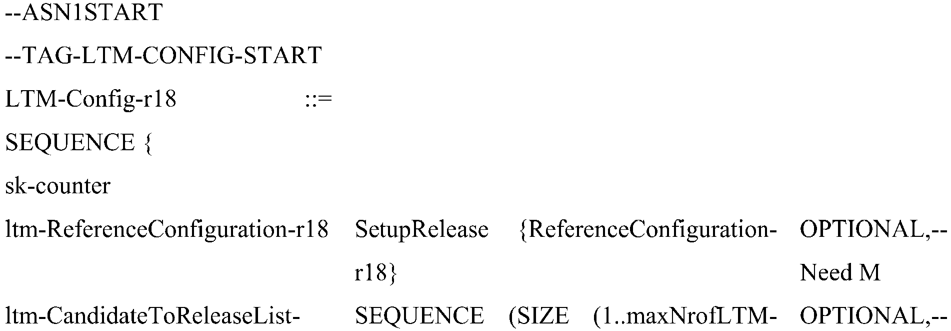

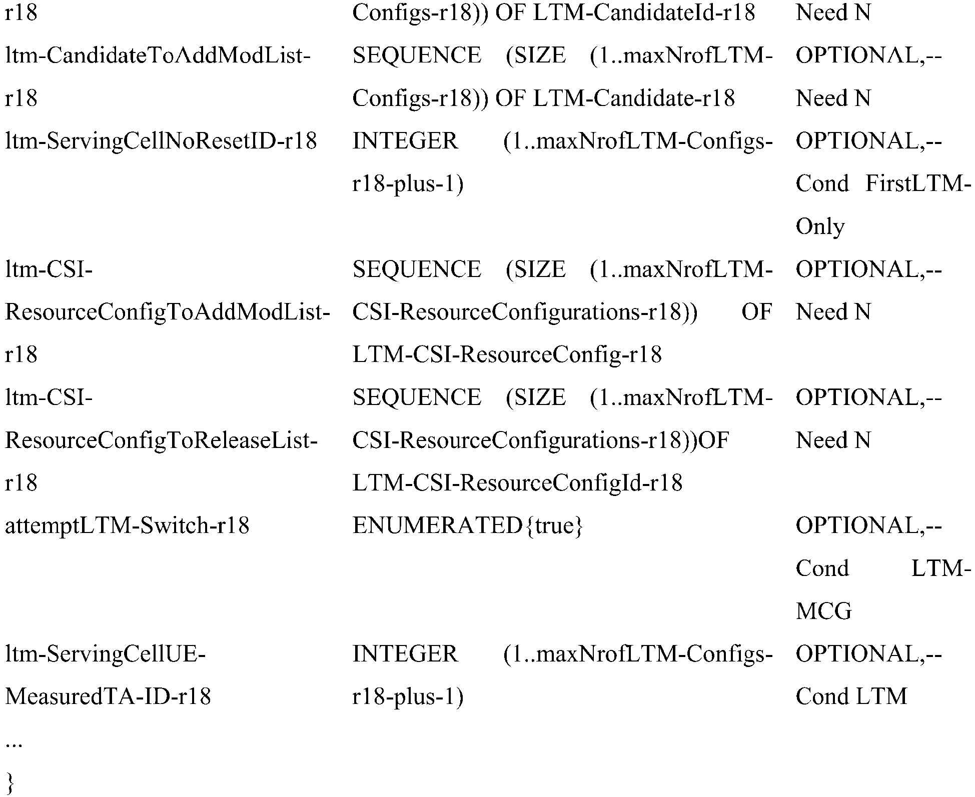

In operation 2.02, before the S-MN transmits the LTM configuration to the UE, the S-MN receives a first message transmitted by the C-MN. The first message includes an sk-counter associated with at least one candidate cell.

For example, four LTM candidate cells are included under the C-MN, the first message includes the sk-counter corresponding to each candidate cell, which may be understood as: the configuration granularity of the sk-counter is per LTM candidate cell.

For another example, four LTM candidate cells are included under the C-MN, the first message includes one sk-counter, i.e., all the candidate cells under the C-MN correspond to the same sk-counter, which may be understood as: the configuration granularity of the sk-counter is per C-MN.

In operation 2.03, based on operation 2.02, the C-MN receives a second message transmitted by the S-MN before transmitting the first message to the S-MN. The second message is used for requesting the C-MN to provide the sk-counter configuration. The time stage where the S-MN transmits the second message to the C-MN includes an LTM preparation stage.

### UE side

In the second example, the method for wireless communication at the UE side may include operation 2.11 to operation 2.13.

In operation 2.11, the UE determines the target cell though receiving the LTM cell switch MAC CE or evaluating the execution condition of the candidate cell. If the LTM cell switch MAC CE includes key update information, or the target cell and the current serving cell belong to different MN/cell groups, the behaviors of the UE include following a) to f).
a) The K_{gNB} of the target cell is generated and the sk-counter is determined; and the S-K_{gNB}is updated based on the K_{gNB} of the target cell and the sk-counter. Alternatively, the sk-counter is determined; and the S-K_{gNB} is updated based on a current K_{gNB} and the sk-counter.
b) A manner of determining the sk-counter includes one or more of:
   i, selecting an sk-counter associated with a target cell;
   ii, selecting an sk-counter associated with the MN to which the target cell belongs;
   iii, selecting the first unused sk-counter from a sk-counter list associated with the MN to which the target cell belongs;
   iv, applying the sk-counter in the target cell configuration;
   v, applying the sk-counter (corresponding to the contents of iii in operation 2.01).
c) A PDCP/RLC entity is reestablished or newly established for the bearer using the key (KeyToUse) configured as master. Optionally, the corresponding behavior is performed when the master key is required to be updated; or the corresponding behavior is required to be performed when the PDCP termination point changes.
d) A PDCP/RLC entity is reestablished or newly established for the bearer with the KeyToUse configured as secondary.
e) The PDCP/RLC entity corresponding to the first bearer is deleted, where the first bearer is included in the source configuration but is excluded from the target configuration.
f) The PDCP SDU discard is performed for the SRB. Furthermore, the PDCP SDU discard is performed based on the indication of the network, and the SRB is SRB1/SRB2.

In operation 2.12, the UE transmits an RRC reconfiguration complete message to the target cell, and the RRC reconfiguration complete message includes the used sk-counter.

In operation 2.13, the key update information is included in the LTM cell switch MAC CE.

For example, the LTM cell switch MAC CE includes the first indication information. As an example, the first indication information may be 1 bit, and when the indication information has a value of 1, it indicates that the UE needs to perform the key update. In an implementation, the indication information of 1 bit may be used for instructing the UE to update the K_{gNB} and the S-K_{gNB}. In another implementation, the indication information of 1 bit may also be used for instructing the UE to update the S-K_{gNB}.

### Third example

In the third example, the interaction between an MN and an SN is mainly involved in, and for example, the MN may include a C-MN, a T-MN, or the like. The interaction may specifically include operation 3.01.

In operation 3.01, the C-MN receives a third message transmitted by the S-MN. The third message includes key information of at least one candidate cell/target cell. The key information at least includes K_{NG-RAN*} (the key derived by the S-MN). The C-MN generates a K_{SN} based on the K_{NG-RAN*} of the candidate cell and the sk-counter; and transmits the K_{SN} to the SN.

In an implementation, after the UE successfully accesses the C-MN or the C-MN receives an indication from the S-MN, the C-MN transmits fourth indication information to the SN, where the fourth indication information includes a K_{SN} corresponding to the target cell.

In another implementation, the C-MN transmits a K_{SN} corresponding to at least one candidate cell to the SN, after the UE successfully accesses or after the C-MN receives the indication from the S-MN, the C-MN transmits fourth indication information to the SN, where the fourth indication information is used for instructing the SN to use which K_{SN}.

In the embodiments of the present disclosure, the candidate cell configuration may be used by the UE to perform the MCG LTM. The candidate cell configuration includes an MCG configuration, and optionally, the candidate cell configuration further includes an SCG configuration. In the solution, the SCG configuration may be a source PSCell/SCG configuration (for example, applicable to the inter-CU MCG LTM with SCG unchanged scenario), or may be another PSCell/SCG configuration (for example, applicable to the inter-CU MCG LTM with SCG change scenario).

In the embodiments of the present disclosure, in order to avoid the complexity caused by updating both the MN key and the SN key when performing the inter-CU MCG LTM with SCG unchanged, the network may be limited to include the SN terminated bearer configuration in the current configuration and/or the LTM candidate cell configuration.

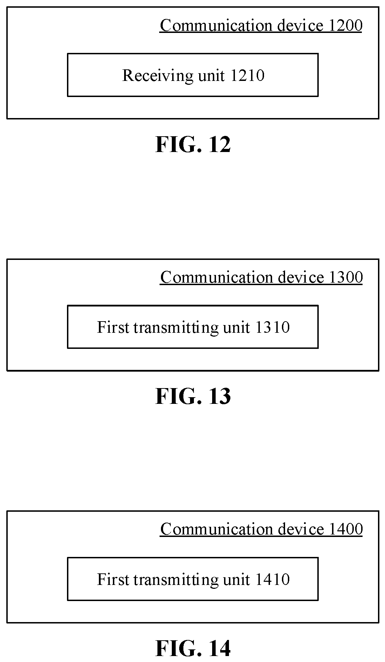

The method embodiments of the present disclosure are described in detail above with reference to FIG. 1 to FIG. 11, and device embodiments of the present disclosure are described in detail below with reference to FIG. 12 to FIG. 16. It is to be understood that the method embodiments correspond to the device embodiments, and the portions not described in detail of the device embodiments may refer to the method embodiments.

FIG. 12 is a schematic structural diagram of a communication device according to an embodiment of the present disclosure. The communication device 1200 shown in FIG. 12 may be a terminal device, and the communication device 1200 may include a receiving unit 1210. The receiving unit 1210 is configured to receive one or more counters transmitted by a first master node. The one or more counters are used for determining a secondary key when the terminal device performs a first handover procedure, the secondary key is used by the terminal device to communicate with a secondary node, and the first handover procedure is an MCG LTM procedure.

Optionally, the one or more counters are carried in a handover command, and the handover command is used for instructing the terminal device to switch to a target cell during the first handover procedure.

Optionally, the one or more counters are carried in first configuration information, the first configuration information includes configuration information of one or more candidate cells, and the configuration information of the one or more candidate cells is used for the terminal device to perform the first handover procedure.

Optionally, each of one or more candidate master nodes corresponds to one counter; or each of the one or more candidate master nodes corresponds to one counter set; or each of the one or more candidate cells corresponds to one counter; or configuration information of each of the one or more candidate cells includes one counter; or all of the one or more candidate cells correspond to one counter, where the one or more candidate cells belong to the one or more candidate master nodes.

Optionally, the configuration information of the one or more candidate cells includes one or more of: configuration information of an MCG; or configuration information of an SCG.

Optionally, the configuration information of the SCG includes one or more of: configuration information of a source SCG; or configuration information of another SCG other than the configuration information of the source SCG.

Optionally, the secondary key is determined by the terminal device based on a target counter among the one or more counters, and the target counter meets one of following conditions: corresponding to a target cell among the one or more candidate cells; corresponding to a master node to which the target cell belongs; belonging to a first counter set, where the first counter set corresponds to the master node to which the target cell belongs; belonging to a second counter set, where the second counter set corresponds to the target cell; being included in configuration information of the target cell; or corresponding to all of the one or more candidate cells.

Optionally, the communication device further includes a transmitting unit. The transmitting unit is configured to transmit a RRC reconfiguration complete message to the target cell, where the RRC reconfiguration complete message includes the target counter.

Optionally, a handover command transmitted during the first handover procedure includes first indication information, and the first indication information is used for indicating one or more of: the terminal device needs to update a master key; or the terminal device needs to update the secondary key.

Optionally, the first configuration information further includes one or more of: identifier(s) of the one or more candidate cells; or an identifier of a cell group corresponding to the one or more candidate cells.

Optionally, the communication device further includes a determining unit. The determining unit is configured to determine the secondary key based on a master key and a target counter after the terminal device receives the one or more counter transmitted by the first master node, where the target counter is a counter among the one or more counters.

Optionally, the communication device further includes a generating unit. The generating unit is configured to generate a master key before the terminal device determines the secondary key based on the master key and the target counter.

Optionally, after the terminal device receives the one or more counters transmitted by the first master node, the communication device further includes: the terminal device performs a target operation, where the target operation includes one or more of: reestablishing or newly establishing a PDCP entity for a first bearer; reestablishing or newly establishing a RLC entity for the first bearer; reestablishing or newly establishing a PDCP entity for a second bearer; reestablishing or newly establishing a RLC entity for a second bearer; deleting a PDCP entity corresponding to a third bearer; deleting a RLC entity corresponding to a third bearer; discarding a PDCP SDU for a signaling radio bearer. The first bearer is a bearer using a master key, and the second bearer is a bearer using the secondary key. The configuration information of the third bearer is included in configuration information of a source cell, and the configuration information of the third bearer is excluded from configuration information of a target cell.

Optionally, the target operation is performed in a case where a first condition is met, and the first condition includes that the master key is required to be updated and/or a PDCP termination point changes.

Optionally, the first handover procedure is used for: performing cell handover within a CU); or performing cell handover between CUs.

Optionally, during the first handover procedure, an SCG of the terminal device meets one of: remaining unchanged; being changed to another SCG other than a current SCG; or being added with another SCG other than the current SCG.

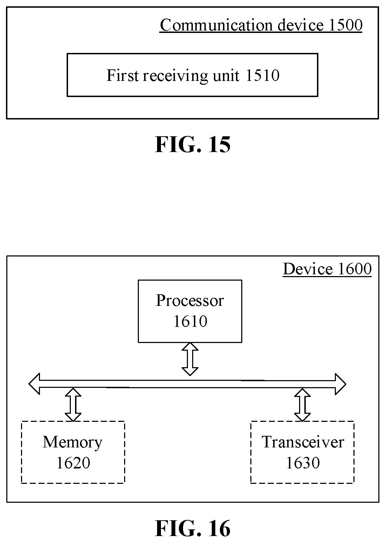

Optionally, the receiving unit 1210 may be a processor 1610. The communication device 1200 may further include a transceiver 1620 and a memory 1630, as shown in FIG. 16.

FIG. 13 is a schematic structural diagram of a communication device according to an embodiment of the present disclosure. The communication device 1300 shown in FIG. 13 may be a first master node, and the communication device 1300 may include a first transmitting unit 1310. The first transmitting unit 1310 is configured to transmit one or more counters to a terminal device. The one or more counters are used for determining a secondary key when the terminal device performs a first handover procedure, the secondary key is used by the terminal device to communicate with a secondary node, and the first handover procedure is an MCG LTM procedure.

Optionally, the one or more counters are carried in a handover command, and the handover command is used for instructing the terminal device to switch to a target cell during the first handover procedure.

Optionally, the communication device further includes a first receiving unit. The first receiving unit is configured to receive a first message transmitted by a second master node, where the second master node is a master node to which at least one candidate cell belongs, the first message includes at least one counter, and the at least one counter is used for determining a secondary key associated with the at least one candidate cell.

Optionally, each candidate cell under the second master node corresponds to one counter; or all candidate cells under the second master node correspond to one counter; or the first message includes a counter corresponding to a target cell under the second master node.

Optionally, the communication device further includes a second transmitting unit. The second transmitting is configured to transmit a second message to the second master node before the first master node receives the first message transmitted by the second master node, where the second message is used for requesting the second master node to provide one or more of: a counter for each candidate cell under the second master node; counter for all candidate cells under the second master node, where the all candidate cells correspond to one counter; or a counter for a target cell.

Optionally, the second message includes information of the target cell.

Optionally, the second message is transmitted during an LTM preparation stage in the first handover procedure; or the second message is transmitted in response to the terminal device successfully accessing the first master node; or the second message is transmitted after the first master node determines the target cell and before the first master node transmits the handover command.

Optionally, the second message is transmitted after the first master node determines the target cell and before the first master node transmits the handover command, which includes: the second message is transmitted after a CU of the first master node receives second indication information transmitted by a DU of the first master node, where the second indication information includes information of the target cell.

Optionally, the communication device further includes a third transmitting unit. The third transmitting unit is configured to transmit, by using a CU, the at least one counter to a DU of the first master node after the first master node receives the first message transmitted by the second master node.

Optionally, the DU(s) of the first master node is one of: a current DU of the terminal device; a DU where the target cell is located, where the first handover procedure is configured to perform inter-DU handover within the CU; or all DUs including the candidate cell under the first master node.

Optionally, the handover command is transmitted in a case where the target cell does not belong to the first master node.

Optionally, the communication device further includes a fourth transmitting unit. The fourth transmitting unit is configured to transmit, by using a DU, third indication information to a CU) of the first master node, where the third indication information includes information of the target cell, where the DU of the first master node receives feedback information for the third indication information transmitted by the CU of the first master node. The feedback information includes one of: a counter corresponding to the target cell; or a counter corresponding to a master node to which the target cell belongs.

Optionally, the third indication information is transmitted in a case where the target cell does not belong to the first master node.

Optionally, the one or more counters are carried in first configuration information, the first configuration information includes configuration information of one or more candidate cells, and the configuration information of the one or more candidate cells is used for the terminal device to perform the first handover procedure.

Optionally, each of one or more candidate master nodes corresponds to one counter; or each of the one or more candidate master nodes corresponds to one counter set; or each of the one or more candidate cells corresponds to one counter; or configuration information of each of the one or more candidate cells includes one counter; or all of the one or more candidate cells correspond to one counter, where the one or more candidate cells belong to the one or more candidate master nodes.

Optionally, the configuration information of the one or more candidate cells includes one or more of: configuration information of an MCG; or configuration information of an SCG.

Optionally, the configuration information of the SCG includes one or more of: configuration information of a source SCG; or configuration information of another SCG other than the configuration information of the source SCG.

Optionally, a handover command transmitted during the first handover procedure includes first indication information. The first indication information is used for indicating one or more of: the terminal device needs to update a master key; or the terminal device needs to update the secondary key.

Optionally, the first configuration information further includes one or more of: identifier(s) of the one or more candidate cells; or an identifier of a cell group corresponding to the one or more candidate cells.

Optionally, the communication device further includes a second receiving unit. The second receiving unit is configured to receive a first message transmitted by a second master node, where the second master node is a master node to which at least one candidate cell belongs, the first message includes at least one counter, and the at least one counter is used for determining a secondary key associated with the at least one candidate cell.

Optionally, each candidate cell under the second master node corresponds to one counter; or all candidate cells under the second master node correspond to one counter.

Optionally, the communication device further includes a fifth transmitting unit. The fifth transmitting unit is configured to transmit a second message to the second master node before the first master node receives the first message transmitted by the second master node, where the second message is used for requesting the second master node to provide one or more of: a counter for each candidate cell under the second master node; counter for all candidate cells under the second master node, where the all candidate cells correspond to one counter; or a counter for a target cell.

Optionally, the second message is transmitted during an LTM preparation stage in the first handover procedure; or the second message is transmitted in response to the terminal device successfully accessing the first master node.

Optionally, the first handover procedure is used for: performing cell handover within a CU; or performing cell handover between CUs.

Optionally, during the first handover procedure, a Secondary Cell Group (SCG) of the terminal device meets one of: remaining unchanged; being changed to another SCG other than a current SCG; or being added with another SCG other than the current SCG.

Optionally, the first transmitting unit 1310 may be a processor 1610. The communication device 1300 may further include a transceiver 1620 and a memory 1630, as shown in FIG. 16.

FIG. 14 is a schematic structural diagram of a communication device according to an embodiment of the present disclosure. The communication device 1400 shown in FIG. 14 may be a second master node, and the communication device 1400 may include a first transmitting unit 1410. The first transmitting unit 1410 is configured to transmit a first message to a first master node, where the first master node is a source master node when a terminal device performs a first handover procedure, the second master node is a master node to which at least one candidate cell associated with the first handover procedure belongs, the first message includes at least one counter, and the at least one counter is used for determining a secondary key associated with the at least one candidate cell, the secondary key is used by the terminal device to communicates with a secondary node, and the first handover procedure being a MCG LTM procedure.

Optionally, each candidate cell under the second master node corresponds to one counter; or all candidate cells under the second master node correspond to one counter; or the first message includes a counter corresponding to a target cell under the second master node.

Optionally, the communication device further includes a first receiving unit. The first receiving unit is configured to receive a second message transmitted by the first master node before the second master node transmits the first message transmitted to the first master node, where the second message is used for requesting the second master node to provide one or more of: Optionally, the communication device further includes a fifth transmitting unit. counter for all candidate cells under the second master node, where the all candidate cells correspond to one counter; or a counter for a target cell.

Optionally, the second message includes information of the target cell.

Optionally, the second message is transmitted during an LTM preparation stage in the first handover procedure; or the second message is transmitted in response to the terminal device successfully accessing the first master node; or the second message is transmitted after the first master node determines the target cell and before the first master node transmits the handover command.

Optionally, the communication device further includes a second receiving unit. The second receiving unit is configured to receive a third message transmitted by the first master node after the second master node transmits the first message to the first master node, where the third message includes one of: a master key associated with the at least one candidate cell; or a master key associated with a target cell among the at least one candidate cell.

Optionally, the communication device further includes a first determining unit. The first determining unit is configured to determine the secondary key associated with the at least one candidate cell based on the master key associated with the at least one candidate cell, where the second master node transmits the secondary key associated with the at least one candidate cell to the secondary node.

Optionally, the communication device further includes a second transmitting unit. The second transmitting unit is configured to transmit fourth indication information to the secondary node, where the fourth indication information is used for instructing the secondary node to use a target secondary key among the secondary key associated with the at least one candidate cell.

Optionally, the communication device further includes a second determining unit and a third transmitting unit. The second determining unit is configured to determine a secondary key associated with the target cell based on the master key associated with the target cell and a counter corresponding to the target cell. The third transmitting unit is configured to transmit the secondary key associated with the target cell to the secondary node.

Optionally, the first handover procedure is used for performing cell handover between CUs.

Optionally, during the first handover procedure, an SCG of the terminal device meets one of: remaining unchanged; being changed to another SCG other than a current SCG; or being added with another SCG other than the current SCG.

Optionally, the first transmitting unit 1410 may be a processor 1610. The communication device 1400 may further include a transceiver 1620 and a memory 1630, as shown in FIG. 16.

FIG. 15 is a schematic structural diagram of a communication device according to an embodiment of the present disclosure. The communication device 1500 shown in FIG. 15 may be a secondary node, and the communication device 1500 may include a first receiving unit 1510. The first receiving unit 1510 is configured to receive one or more secondary keys transmitted by a second master node, where the one or more secondary keys are associated with at least one candidate cell under the second master node, or the one or more secondary keys are associated with a target cell under the second master node, the secondary keys is used by the terminal device to communicate with the secondary node after performing a first handover procedure, the second master node is a master node to which the at least one candidate cell belongs, and the first handover procedure is a MCG LTM procedure.

Optionally, the communication device further includes a second receiving unit. The second receiving unit is configured to receive fourth indication information transmitted by the second master node, where the fourth indication information is used for instructing the secondary node to use a target secondary key among the secondary key associated with the at least one candidate cell.

Optionally, the first handover procedure is used for performing cell handover between CUs.

Optionally, during the first handover procedure, an SCG of the terminal device meets one of: remaining unchanged; being changed to another SCG other than a current SCG; or being added with another SCG other than the current SCG.

Optionally, the first receiving unit 1510 may be a processor 1610. The communication device 1500 may further include a transceiver 1620 and a memory 1630, as shown in FIG. 16.

FIG. 16 is a schematic structural diagram of a communication device according to an embodiment of the present disclosure. The dashed line in FIG. 16 indicates that the unit or module is optional. The device 1600 may be used to implement the method described in the aforementioned method embodiments. The device 1600 may be a chip, a terminal device, or a network device.

The device 1600 may include one or more processors 1610. The processor 1610 may support the device 1600 to implement the methods described in the aforementioned method embodiments. The processor 1610 may be a general-purpose processor or a special-purpose processor. For example, the processor may be a Central Processing Unit (CPU). Alternatively, the processor may also be another general-purpose processor, a Digital Signal Processor (DSP), an Application Specific Integrated Circuit (ASIC), a Field Programmable Gate Array (FPGA) or another programmable logic device, a discrete gate or transistor logic device, a discrete hardware component, or the like. The general-purpose processor may be a microprocessor or the processor may be any conventional processor or the like.

The device 1600 may also include one or more memories 1620. The memory 1620 has stored a program that is executable by the processor 1610 to cause the processor 1610 to perform each of the methods described in the aforementioned method embodiments. The memory 1620 may be independent of the processor 1610 or may be integrated in the processor 1610.

The device 1600 may also include a transceiver 1630. The processor 1610 may communicate with other devices or chips through the transceiver 1630. For example, the processor 1610 may transmit and receive data with other devices or chips through the transceiver 1630.

An embodiment of the present disclosure further provides a computer-readable storage medium configured to store a program. The computer-readable storage medium may be applied to the terminal device or the network device in the embodiments of the present disclosure, and the computer program causes a computer to perform the method performed by the terminal device or the network device in various embodiments of the present disclosure.

An embodiment of the present disclosure further provides a computer program product, which includes a computer program. The computer program product may be applied to the terminal device or the network device in the embodiments of the present disclosure, and the computer program causes a computer to perform the method performed by the terminal device or the network device in various embodiments of the present disclosure.

An embodiment of the present disclosure further provides a computer program. The computer program may be applied to the terminal or the network device in the embodiments of the present disclosure, and the computer program causes a computer to perform the method performed by the terminal device or the network device in various embodiments of the present disclosure.

It is to be understood that the terms "system" and "network" are often used interchangeably herein. In addition, the terms used in the embodiments of the present disclosure are used only for explanation of specific embodiments of the present disclosure, and the terms are not intended to limit the present disclosure. The terms "first", "second", "third", "fourth" and the like in the description and claims of the present disclosure and the accompanying drawings are used to distinguish different objects and are not used to describe a particular sequence. Furthermore, the terms "including" and "having" and any variations thereof are intended to cover non-exclusive inclusion.

The "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B.

In the embodiments of the present disclosure, the expression "B corresponding to A" means that B is associated with A, and B may be determined based on A. However, it is also to be understood that determining B based on A does not mean that B is determined based on A alone, but that B may also be determined based on A and/or other information.

In the description of the embodiments of the present disclosure, the term "correspond" may mean that there is a direct correspondence or an indirect correspondence between the two, may also mean that there is an association relationship between the two, and may also be a relationship between indication and being indicated, configuration and being configured, etc.

In the embodiments of the present disclosure, the mentioned "including" may refer to directly including or indirectly including. Optionally, "including" mentioned in the embodiments of the present disclosure may be replaced with "indicating" or "used for determining". For example, A includes B, which may be replaced by A indicating B, or A is used for determining B.

In the embodiments of the present disclosure, the term "predefined" or "preconfigured" may be achieved by pre-storing corresponding codes, tables or other means used for indicating relevant information in devices (e.g., including the terminal devices and the network devices), and the specific implementation thereof is not limited in the present disclosure. For example, predefined may refer to what is defined in the protocol.

In the embodiments of the present disclosure, the "protocol" may be a standard protocol in the communication field. For example, the protocol may include an LTE protocol, an NR protocol, and related protocols applied in future communication systems, which are not limited in the present disclosure.

In the embodiments of the present disclosure, the term "and/or" is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the related objects is "or".

In various embodiments of the present disclosure, the sequence number(s) of the above processes do not imply the sequence(s) of execution, and the sequence of execution of each process should be determined according to the functions and internal logic thereof, and should not constitute any limitation on the implementation process of the embodiments of the present disclosure.

In the several embodiments provided in the present disclosure, it is to be understood that the disclosed system, devices, and method may be implemented in other modes. For example, the device embodiments described above are only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments of the present disclosure.

In addition, functional units in various embodiments of the disclosure may be integrated into one processing unit, or each of the units may be physically separated, or two or more units may be integrated into one unit.

The aforementioned embodiments may be implemented in whole or in part by software, hardware, firmware or any combination thereof. When implemented in software, the aforementioned embodiments may be implemented in whole or in part in the form of a computer program product. The computer program product includes one or more computer instructions. When the computer program instructions are loaded and executed on a computer, the flows or functions may be generated in whole or in part according to the embodiments of the present disclosure. The computer may be a general-purpose computer, a dedicated computer, a computer network, or other programmable devices. The computer instructions may be stored in a computer-readable storage medium or transmitted from one computer-readable storage medium to another computer-readable storage medium. For example, the computer instructions may be transmitted from one Web site, computer, server, or data center to another Web site, computer, server, or data center in a wired (e.g., coaxial cable, optical fiber, Digital Subscriber Line (DSL)) manner or a wireless (e.g., infrared, wireless, microwave, etc.) manner. The computer-readable storage medium may be any available medium that a computer may access or may be a data storage device such as a server, a data center, or the like that is integrated with one or more available media. The available medium may be a magnetic medium (e.g., floppy disk, hard disk, magnetic tape), an optical medium (e.g., Digital Video Disc (DVD)), or a semiconductor medium (e.g., Solid State Disk (SSD)), etc.

The above descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. A method for wireless communication, comprising:
receiving, by a terminal device, one or more counters transmitted by a first master node,
wherein the one or more counters are used for determining a secondary key when the terminal device performs a first handover procedure, the secondary key is used by the terminal device to communicate with a secondary node, and the first handover procedure is a Master Cell Group Layer 1/Layer 2 Triggered Mobility (MCG LTM) procedure.

2. The method of claim 1, wherein the one or more counters are carried in a handover command, and the handover command is used for instructing the terminal device to switch to a target cell during the first handover procedure.

3. The method of claim 1, wherein the one or more counters are carried in first configuration information, the first configuration information comprises configuration information of one or more candidate cells, and the configuration information of the one or more candidate cells is used for the terminal device to perform the first handover procedure.

4. The method of claim 3, wherein
each of one or more candidate master nodes corresponds to one counter; or
each of the one or more candidate master nodes corresponds to one counter set; or
each of the one or more candidate cells corresponds to one counter; or
configuration information of each of the one or more candidate cells comprises one counter; or
all of the one or more candidate cells correspond to one counter,
wherein the one or more candidate cells belong to the one or more candidate master nodes.

5. The method of claim 3 or 4, wherein the configuration information of the one or more candidate cells comprises one or more of:
configuration information of an MCG; or
configuration information of a Secondary Cell Group (SCG).

6. The method of claim 5, wherein the configuration information of the SCG comprises one or more of:
configuration information of a source SCG; or
configuration information of another SCG other than the configuration information of the source SCG.

7. The method of any one of claims 3 to 6, wherein the secondary key is determined by the terminal device based on a target counter among the one or more counters, and the target counter meets one of following conditions:
corresponding to a target cell among the one or more candidate cells;
corresponding to a master node to which the target cell belongs;
belonging to a first counter set, wherein the first counter set corresponds to the master node to which the target cell belongs;
belonging to a second counter set, wherein the second counter set corresponds to the target cell;
being comprised in configuration information of the target cell; or
corresponding to all of the one or more candidate cells.

8. The method of claim 7, further comprising:
transmitting, by the terminal device, a Radio Resource Control (RRC) reconfiguration complete message to the target cell, wherein the RRC reconfiguration complete message comprises the target counter.

9. The method of any one of claims 3 to 8, wherein a handover command transmitted during the first handover procedure comprises first indication information, and the first indication information is used for indicating one or more of:
the terminal device needs to update a master key; or
the terminal device needs to update the secondary key.

10. The method of any one of claims 3 to 9, wherein the first configuration information further comprises one or more of:
identifier(s) of the one or more candidate cells; or
an identifier of a cell group corresponding to the one or more candidate cells.

11. The method of any one of claims 1 to 10, further comprising: after receiving, by the terminal device, the one or more counters transmitted by the first master node,
determining, by the terminal device, the secondary key based on a master key and a target counter, wherein the target counter is a counter among the one or more counters.

12. The method of claim 11, further comprising: before determining, by the terminal device, the secondary key based on the master key and the target counter,
generating, by the terminal device, the master key.

13. The method of any one of claims 1 to 12, further comprising: after receiving, by the terminal device, the one or more counters transmitted by the first master node,
performing, by the terminal device, a target operation, wherein the target operation comprises one or more of:
reestablishing or newly establishing a Packet Data Convergence Protocol (PDCP) entity for a first bearer;
reestablishing or newly establishing a Radio Link Control (RLC) entity for the first bearer;
reestablishing or newly establishing a Packet Data Convergence Protocol (PDCP) entity for a second bearer;
reestablishing or newly establishing a Radio Link Control (RLC) entity for the second bearer;
deleting a Packet Data Convergence Protocol (PDCP) entity corresponding to a third bearer;
deleting a Radio Link Control (RLC) entity corresponding to the third bearer;
discarding a Packet Data Convergence Protocol (PDCP) Service Data Unit (SDU) for a signaling radio bearer,
wherein the first bearer is a bearer using a master key, and the second bearer is a bearer using the secondary key, and
wherein configuration information of the third bearer is comprised in configuration information of a source cell, and the configuration information of the third bearer is excluded from configuration information of a target cell.

14. The method of claim 13, wherein the target operation is performed in a case where a first condition is met, and the first condition comprises that the master key is required to be updated and/or a PDCP termination point changes.

15. The method of any one of claims 1 to 14, wherein the first handover procedure is used for:
performing cell handover within a Central Unit (CU); or
performing cell handover between CUs.

16. The method of any one of claims 1 to 15, wherein during the first handover procedure, a Secondary Cell Group (SCG) of the terminal device meets one of:
remaining unchanged;
being changed to another SCG other than a current SCG; or
being added with another SCG other than the current SCG.

17. A method for wireless communication, comprising:
transmitting, by a first master node, one or more counters to a terminal device,
wherein the one or more counters are used for determining a secondary key when the terminal device performs a first handover procedure, the secondary key is used by the terminal device to communicate with a secondary node, and the first handover procedure is a Master Cell Group Layer 1/Layer 2 Triggered Mobility (MCG LTM) procedure.

18. The method of claim 17, wherein the one or more counters are carried in a handover command, and the handover command is used for instructing the terminal device to switch to a target cell during the first handover procedure.

19. The method of claim 18, further comprising:
receiving, by the first master node, a first message transmitted by a second master node, wherein the second master node is a master node to which at least one candidate cell belongs, the first message comprises at least one counter, and the at least one counter is used for determining a secondary key associated with the at least one candidate cell.

20. The method of claim 19, wherein
each candidate cell under the second master node corresponds to one counter; or
all candidate cells under the second master node correspond to one counter; or
the first message comprises a counter corresponding to a target cell under the second master node.

21. The method of claim 19 or 20, further comprising: before receiving, by the first master node, the first message transmitted by the second master node,
transmitting, by the first master node, a second message to the second master node, wherein the second message is used for requesting the second master node to provide one or more of:
a counter for each candidate cell under the second master node;
counter for all candidate cells under the second master node, wherein the all candidate cells correspond to one counter; or
a counter for the target cell.

22. The method of claim 21, wherein the second message comprises information of the target cell.

23. The method of claim 21 or 22, wherein
the second message is transmitted during a Layer 1/Layer 2 Triggered Mobility (LTM) preparation stage in the first handover procedure; or
the second message is transmitted in response to the terminal device successfully accessing the first master node; or
the second message is transmitted after the first master node determines the target cell and before the first master node transmits the handover command.

24. The method of claim 23, wherein the second message is transmitted after the first master node determines the target cell and before the first master node transmits the handover command, which comprises:
the second message is transmitted after a Central Unit (CU) of the first master node receives second indication information transmitted by a Distributed Unit (DU) of the first master node, wherein the second indication information comprises information of the target cell.

25. The method of any one of claims 19 to 24, further comprising: after receiving, by the first master node, the first message transmitted by the second master node,
transmitting, by a Central Unit (CU) of the first master node, the at least one counter to a Distributed Unit (DU) of the first master node.

26. The method of claim 25, wherein the DU(s) of the first master node is one of:
a current DU of the terminal device;
a DU where the target cell is located, wherein the first handover procedure is configured to perform inter-DU handover within the CU; or
all DUs comprising the candidate cell under the first master node.

27. The method of any one of claims 18 to 26, wherein the handover command is transmitted in a case where the target cell does not belong to the first master node.

28. The method of any one of claims 18 to 27, further comprising:
transmitting, by a Distributed Unit (DU) of the first master node, third indication information to a Central Unit (CU) of the first master node, wherein the third indication information comprises information of the target cell; and
receiving, by the DU of the first master node, feedback information for the third indication information transmitted by the CU of the first master node, wherein the feedback information comprises one of:
a counter corresponding to the target cell; or
a counter corresponding to a master node to which the target cell belongs.

29. The method of claim 28, wherein the third indication information is transmitted in a case where the target cell does not belong to the first master node.

30. The method of claim 17, wherein the one or more counters are carried in first configuration information, the first configuration information comprises configuration information of one or more candidate cells, and the configuration information of the one or more candidate cells is used for the terminal device to perform the first handover procedure.

31. The method of claim 30, wherein
each of one or more candidate master nodes corresponds to one counter; or
each of the one or more candidate master nodes corresponds to one counter set; or
each of the one or more candidate cells corresponds to one counter; or
configuration information of each of the one or more candidate cells comprises one counter; or
all of the one or more candidate cells correspond to one counter,
wherein the one or more candidate cells belong to the one or more candidate master nodes.

32. The method of claim 30 or 31, wherein the configuration information of the one or more candidate cells comprises one or more of:
configuration information of an MCG; or
configuration information of a Secondary Cell Group (SCG).

33. The method of claim 32, wherein the configuration information of the SCG comprises one or more of:
configuration information of a source SCG; or
configuration information of another SCG other than the configuration information of the source SCG.

34. The method of any one of claims 30 to 33, wherein a handover command transmitted during the first handover procedure comprises first indication information, and the first indication information is used for indicating one or more of:
the terminal device needs to update a master key; or
the terminal device needs to update the secondary key.

35. The method of any one of claims 30 to 34, wherein the first configuration information further comprises one or more of:
identifier(s) of the one or more candidate cells; or
an identifier of a cell group corresponding to the one or more candidate cells.

36. The method of any one of claims 30 to 35, further comprising:
receiving, by the first master node, a first message transmitted by a second master node, wherein the second master node is a master node to which at least one candidate cell belongs, the first message comprises at least one counter, and the at least one counter is used for determining a secondary key associated with the at least one candidate cell.

37. The method of claim 36, wherein
each candidate cell under the second master node corresponds to one counter; or
all candidate cells under the second master node correspond to one counter.

38. The method of claim 36 or 37, further comprising: before receiving, by the first master node, the first message transmitted by the second master node,
transmitting, by the first master node, a second message to the second master node, wherein the second message is used for requesting the second master node to provide one or more of:
a counter for each candidate cell under the second master node;
counter for all candidate cells under the second master node, wherein the all candidate cells correspond to one counter; or
a counter for a target cell.

39. The method of claim 38, wherein
the second message is transmitted during a Layer 1/Layer 2 Triggered Mobility (LTM) preparation stage in the first handover procedure; or
the second message is transmitted in response to the terminal device successfully accessing the first master node.

40. The method of any one of claims 17 to 39, wherein the first handover procedure is used for:
performing cell handover within a Central Unit (CU); or
performing cell handover between CUs.

41. The method of any one of claims 17 to 40, wherein during the first handover procedure, a Secondary Cell Group (SCG) of the terminal device meets one of:
remaining unchanged;
being changed to another SCG other than a current SCG; or
being added with another SCG other than the current SCG.

42. A method for wireless communication, comprising:
transmitting, by a second master node, a first message to a first master node, wherein the first master node is a source master node when a terminal device performs a first handover procedure, the second master node is a master node to which at least one candidate cell associated with the first handover procedure belongs, the first message comprises at least one counter, and the at least one counter is used for determining a secondary key associated with the at least one candidate cell, the secondary key being used by the terminal device to communicates with a secondary node, the first handover procedure being a Master Cell Group Layer 1/Layer 2 Triggered Mobility (MCG LTM) procedure.

43. The method of claim 42, wherein
each candidate cell under the second master node corresponds to one counter; or
all candidate cells under the second master node correspond to one counter; or
the first message comprises a counter corresponding to a target cell under the second master node.

44. The method of claim 42 or 43, further comprising: before transmitting, by the second master node, the first message to the first master node,
receiving, by the second master node, a second message transmitted by the first master node, wherein the second message is used for requesting the second master node to provide one or more of:
a counter for each candidate cell under the second master node;
counter for all candidate cells under the second master node, wherein the all candidate cells correspond to one counter; or
a counter for a target cell.

45. The method of claim 44, wherein the second message comprises information of the target cell.

46. The method of claim 44 or 45, wherein
the second message is transmitted during a Layer 1/Layer 2 Triggered Mobility (LTM) preparation stage in the first handover procedure; or
the second message is transmitted in response to the terminal device successfully accessing the first master node; or
the second message is transmitted after the first master node determines the target cell and before the first master node transmits the handover command.

47. The method of claim 42 or 46, further comprising: after transmitting, by the second master node, the first message to the first master node,
receiving, by the second master node, a third message transmitted by the first master node, wherein the third message comprises one of:
a master key associated with the at least one candidate cell; or
a master key associated with a target cell among the at least one candidate cell.

48. The method of claim 47, further comprising:
determining, by the second master node, the secondary key associated with the at least one candidate cell based on the master key associated with the at least one candidate cell; and
transmitting, by the second master node, the secondary key associated with the at least one candidate cell to the secondary node.

49. The method of claim 48, further comprising:
transmitting, by the second master node, fourth indication information to the secondary node, wherein the fourth indication information is used for instructing the secondary node to use a target secondary key among the secondary key associated with the at least one candidate cell.

50. The method of claim 47, further comprising:
determining, by the second master node, a secondary key associated with the target cell based on the master key associated with the target cell and a counter corresponding to the target cell; and
transmitting, by the second master node, the secondary key associated with the target cell to the secondary node.

51. The method of any one of claims 42 to 50, wherein the first handover procedure is used for performing cell handover between Central Units (CU).

52. The method of any one of claims 42 to 51, wherein during the first handover procedure, a Secondary Cell Group (SCG) of the terminal device meets one of:
remaining unchanged;
being changed to another SCG other than a current SCG; or
being added with another SCG other than the current SCG.

53. A method for wireless communication, comprising:
receiving, by a secondary node, one or more secondary keys transmitted by a second master node, wherein the one or more secondary keys are associated with at least one candidate cell under the second master node, or the one or more secondary keys are associated with a target cell under the second master node, the secondary keys being used by the terminal device to communicate with the secondary node after performing a first handover procedure, the second master node being a master node to which the at least one candidate cell belongs, and the first handover procedure being a Master Cell Group Layer 1/Layer 2 Triggered Mobility (MCG LTM) procedure.

54. The method of claim 53, further comprising:
receiving, by the secondary node, fourth indication information transmitted by the second master node, wherein the fourth indication information is used for instructing the secondary node to use a target secondary key among the secondary key associated with the at least one candidate cell.

55. The method of claim 53 or 54, wherein the first handover procedure is used for performing cell handover between Central Units (CU).

56. The method of any one of claims 53 to 55, wherein during the first handover procedure, a Secondary Cell Group (SCG) of the terminal device meets one of:
remaining unchanged;
being changed to another SCG other than a current SCG; or
being added with another SCG other than the current SCG.

57. A communication device, wherein the communication device is a terminal device and comprises:
a receiving unit, configured to receive one or more counters transmitted by a first master node,
wherein the one or more counters are used for determining a secondary key when the terminal device performs a first handover procedure, the secondary key is used by the terminal device to communicate with a secondary node, and the first handover procedure is a Master Cell Group Layer 1/Layer 2 Triggered Mobility (MCG LTM) procedure.

58. The communication device of claim 57, wherein the one or more counters are carried in a handover command, and the handover command is used for instructing the terminal device to switch to a target cell during the first handover procedure.

59. The communication device of claim 57, wherein the one or more counters are carried in first configuration information, the first configuration information comprises configuration information of one or more candidate cells, and the configuration information of the one or more candidate cells is used for the terminal device to perform the first handover procedure.

60. The communication device of claim 59, wherein
each of one or more candidate master nodes corresponds to one counter; or
each of the one or more candidate master nodes corresponds to one counter set; or
each of the one or more candidate cells corresponds to one counter; or
configuration information of each of the one or more candidate cells comprises one counter; or
all of the one or more candidate cells correspond to one counter,
wherein the one or more candidate cells belong to the one or more candidate master nodes.

61. The communication device of claim 59 or 60, wherein the configuration information of the one or more candidate cells comprises one or more of:
configuration information of an MCG; or
configuration information of a Secondary Cell Group (SCG).

62. The communication device of claim 61, wherein the configuration information of the SCG comprises one or more of:
configuration information of a source SCG; or
configuration information of another SCG other than the configuration information of the source SCG.

63. The communication device of any one of claims 59 to 62, wherein the secondary key is determined by the terminal device based on a target counter among the one or more counters, and the target counter meets one of following conditions:
corresponding to a target cell among the one or more candidate cells;
corresponding to a master node to which the target cell belongs;
belonging to a first counter set, wherein the first counter set corresponds to the master node to which the target cell belongs;
belonging to a second counter set, wherein the second counter set corresponds to the target cell;
being comprised in configuration information of the target cell; or
corresponding to all of the one or more candidate cells.

64. The communication device of claim 63, further comprising:
a transmitting unit, configured to transmit a Radio Resource Control (RRC) reconfiguration complete message to the target cell, wherein the RRC reconfiguration complete message comprises the target counter.

65. The communication device of any one of claims 59 to 64, wherein a handover command transmitted during the first handover procedure comprises first indication information, and the first indication information is used for indicating one or more of:
the terminal device needs to update a master key; or
the terminal device needs to update the secondary key.

66. The communication device of any one of claims 59 to 65, wherein the first configuration information further comprises one or more of:
identifier(s) of the one or more candidate cells; or
an identifier of a cell group corresponding to the one or more candidate cells.

67. The communication device of any one of claims 57 to 66, further comprising:
a determining unit, configured to determine the secondary key based on a master key and a target counter after the terminal device receives the one or more counter transmitted by the first master node, wherein the target counter is a counter among the one or more counters.

68. The communication device of claim 67, further comprising:
a generating unit, configured to generate a master key before the terminal device determines the secondary key based on the master key and the target counter.

69. The communication device of any one of claims 57 to 68, after the terminal device receives the one or more counters transmitted by the first master node, the communication device further comprises:
the terminal device performs a target operation, wherein the target operation comprises one or more of:
reestablishing or newly establishing a Packet Data Convergence Protocol (PDCP) entity for a first bearer;
reestablishing or newly establishing a Radio Link Control (RLC) entity for the first bearer;
reestablishing or newly establishing a Packet Data Convergence Protocol (PDCP) entity for a second bearer;
reestablishing or newly establishing a Radio Link Control (RLC) entity for the second bearer;
deleting a Packet Data Convergence Protocol (PDCP) entity corresponding to a third bearer;
deleting a Radio Link Control (RLC) entity corresponding to the third bearer;
discarding a Packet Data Convergence Protocol (PDCP) Service Data Unit (SDU) for a signaling radio bearer,
wherein the first bearer is a bearer using a master key, and the second bearer is a bearer using the secondary key, and
wherein configuration information of the third bearer is comprised in configuration information of a source cell, and the configuration information of the third bearer is excluded from configuration information of a target cell.

70. The communication device of claim 69, wherein the target operation is performed in a case where a first condition is met, and the first condition comprises that the master key is required to be updated and/or a PDCP termination point changes.

71. The communication device of any one of claims 57 to 70, wherein the first handover procedure is used for:
performing cell handover within a Central Unit (CU); or
performing cell handover between CUs.

72. The communication device of any one of claims 57 to 71, wherein during the first handover procedure, a Secondary Cell Group (SCG) of the terminal device meets one of:
remaining unchanged;
being changed to another SCG other than a current SCG; or
being added with another SCG other than the current SCG.

73. A communication device, wherein the communication device is a first master node and comprises:
a first transmitting unit, configured to transmit one or more counters to a terminal device,
wherein the one or more counters are used for determining a secondary key when the terminal device performs a first handover procedure, the secondary key is used by the terminal device to communicate with a secondary node, and the first handover procedure is a Master Cell Group Layer 1/Layer 2 Triggered Mobility (MCG LTM) procedure.

74. The communication device of claim 73, wherein the one or more counters are carried in a handover command, and the handover command is used for instructing the terminal device to switch to a target cell during the first handover procedure.

75. The communication device of claim 74, further comprising:
a first receiving unit, configured to receive a first message transmitted by a second master node, wherein the second master node is a master node to which at least one candidate cell belongs, the first message comprises at least one counter, and the at least one counter is used for determining a secondary key associated with the at least one candidate cell.

76. The communication device of claim 75, wherein
each candidate cell under the second master node corresponds to one counter; or
all candidate cells under the second master node correspond to one counter; or
the first message comprises a counter corresponding to a target cell under the second master node.

77. The communication device of claim 75 or 76, further comprising:
a second transmitting, configured to transmit a second message to the second master node before the first master node receives the first message transmitted by the second master node, wherein the second message is used for requesting the second master node to provide one or more of:
a counter for each candidate cell under the second master node;
counter for all candidate cells under the second master node, wherein the all candidate cells correspond to one counter; or
a counter for a target cell.

78. The communication device of claim 77, wherein the second message comprises information of the target cell.

79. The communication device of claim 77 or 78, wherein
the second message is transmitted during a Layer 1/Layer 2 Triggered Mobility (LTM) preparation stage in the first handover procedure; or
the second message is transmitted in response to the terminal device successfully accessing the first master node; or
the second message is transmitted after the first master node determines the target cell and before the first master node transmits the handover command.

80. The communication device of claim 79, wherein the second message is transmitted after the first master node determines the target cell and before the first master node transmits the handover command, which comprises:
the second message is transmitted after a Central Unit (CU) of the first master node receives second indication information transmitted by a Distributed Unit (DU) of the first master node, wherein the second indication information comprises information of the target cell.

81. The communication device of any one of claims 75 to 80, further comprising:
a third transmitting unit configured to transmit, by using a Central Unit (CU), the at least one counter to a Distributed Unit (DU) of the first master node after the first master node receives the first message transmitted by the second master node.

82. The communication device of claim 81, wherein the DU(s) of the first master node is one of:
a current DU of the terminal device;
a DU where the target cell is located, wherein the first handover procedure is configured to perform inter-DU handover within the CU; or
all DUs comprising the candidate cell under the first master node.

83. The communication device of any one of claims 74 to 82, wherein the handover command is transmitted in a case where the target cell does not belong to the first master node.

84. The communication device of any one of claims 74 to 83, further comprising:
a fourth transmitting unit configured to transmit, by using a Distributed Unit (DU) of, third indication information to a Central Unit (CU) of the first master node, wherein the third indication information comprises information of the target cell,
wherein the DU of the first master node receives feedback information for the third indication information transmitted by the CU of the first master node, and the feedback information comprises one of:
a counter corresponding to the target cell; or
a counter corresponding to a master node to which the target cell belongs.

85. The communication device of claim 84, wherein the third indication information is transmitted in a case where the target cell does not belong to the first master node.

86. The communication device of claim 73, wherein the one or more counters are carried in first configuration information, the first configuration information comprises configuration information of one or more candidate cells, and the configuration information of the one or more candidate cells is used for the terminal device to perform the first handover procedure.

87. The communication device of claim 86, wherein
each of one or more candidate master nodes corresponds to one counter; or
each of the one or more candidate master nodes corresponds to one counter set; or
each of the one or more candidate cells corresponds to one counter; or
configuration information of each of the one or more candidate cells comprises one counter; or
all of the one or more candidate cells correspond to one counter,
wherein the one or more candidate cells belong to the one or more candidate master nodes.

88. The communication device of claim 86 or 87, wherein the configuration information of the one or more candidate cells comprises one or more of:
configuration information of an MCG; or
configuration information of a Secondary Cell Group (SCG).

89. The communication device of claim 88, wherein the configuration information of the SCG comprises one or more of:
configuration information of a source SCG; or
configuration information of another SCG other than the configuration information of the source SCG.

90. The communication device of any one of claims 86 to 89, wherein a handover command transmitted during the first handover procedure comprises first indication information, and the first indication information is used for indicating one or more of:
the terminal device needs to update a master key; or
the terminal device needs to update the secondary key.

91. The communication device of any one of claims 86 to 90, wherein the first configuration information further comprises one or more of:
identifier(s) of the one or more candidate cells; or
an identifier of a cell group corresponding to the one or more candidate cells.

92. The communication device of any one of claims 86 to 91, further comprising:
a second receiving unit, configured to receive a first message transmitted by a second master node, wherein the second master node is a master node to which at least one candidate cell belongs, the first message comprises at least one counter, and the at least one counter is used for determining a secondary key associated with the at least one candidate cell.

93. The communication device of claim 92, wherein
each candidate cell under the second master node corresponds to one counter; or
all candidate cells under the second master node correspond to one counter.

94. The communication device of claim 92 or 93, further comprising:
a fifth transmitting unit, configured to transmit a second message to the second master node before the first master node receives the first message transmitted by the second master node, wherein the second message is used for requesting the second master node to provide one or more of:
a counter for each candidate cell under the second master node;
counter for all candidate cells under the second master node, wherein the all candidate cells correspond to one counter; or
a counter for a target cell.

95. The communication device of claim 94, wherein
the second message is transmitted during a Layer 1/Layer 2 Triggered Mobility (LTM) preparation stage in the first handover procedure; or
the second message is transmitted in response to the terminal device successfully accessing the first master node.

96. The communication device of any one of claims 73 to 95, wherein the first handover procedure is used for:
performing cell handover within a Central Unit (CU); or
performing cell handover between CUs.

97. The communication device of any one of claims 73 to 96, wherein during the first handover procedure, a Secondary Cell Group (SCG) of the terminal device meets one of:
remaining unchanged;
being changed to another SCG other than a current SCG; or
being added with another SCG other than the current SCG.

98. A communication device, wherein the communication device is a second master node and comprises:
a first transmitting unit, configured to transmit a first message to a first master node, wherein the first master node is a source master node when a terminal device performs a first handover procedure, the second master node is a master node to which at least one candidate cell associated with the first handover procedure belongs, the first message comprises at least one counter, and the at least one counter is used for determining a secondary key associated with the at least one candidate cell, the secondary key being used by the terminal device to communicates with a secondary node, and the first handover procedure being a Master Cell Group Layer 1/Layer 2 Triggered Mobility (MCG LTM) procedure.

99. The communication device of claim 98, wherein
each candidate cell under the second master node corresponds to one counter; or
all candidate cells under the second master node correspond to one counter; or
the first message comprises a counter corresponding to a target cell under the second master node.

100. The communication device of claim 98 or 99, further comprising:
a first receiving unit, configured to receive a second message transmitted by the first master node before the second master node transmits the first message transmitted to the first master node, wherein the second message is used for requesting the second master node to provide one or more of:
a counter for each candidate cell under the second master node;
counter for all candidate cells under the second master node, wherein the all candidate cells correspond to one counter; or
a counter for a target cell.

101. The communication device of claim 100, wherein the second message comprises information of the target cell.

102. The communication device of claim 100 or 101, wherein
the second message is transmitted during a Layer 1/Layer 2 Triggered Mobility (LTM) preparation stage in the first handover procedure; or
the second message is transmitted in response to the terminal device successfully accessing the first master node; or
the second message is transmitted after the first master node determines the target cell and before the first master node transmits the handover command.

103. The communication device of any one of claims 98 to 102, further comprising:
a second receiving unit, configured to receive a third message transmitted by the first master node after the second master node transmits the first message to the first master node, wherein the third message comprises one of:
a master key associated with the at least one candidate cell; or
a master key associated with a target cell among the at least one candidate cell.

104. The communication device of claim 103, further comprising:
a first determining unit, configured to determine the secondary key associated with the at least one candidate cell based on the master key associated with the at least one candidate cell,
wherein the second master node transmits the secondary key associated with the at least one candidate cell to the secondary node.

105. The communication device of claim 104, further comprising:
a second transmitting unit, configured to transmit fourth indication information to the secondary node, wherein the fourth indication information is used for instructing the secondary node to use a target secondary key among the secondary key associated with the at least one candidate cell.

106. The communication device of claim 103, further comprising:
a second determining unit, configured to determine a secondary key associated with the target cell based on the master key associated with the target cell and a counter corresponding to the target cell; and
a third transmitting unit, configured to transmit the secondary key associated with the target cell to the secondary node.

107. The communication device of any one of claims 98 to 106, wherein the first handover procedure is used for performing cell handover between Central Units (CU).

108. The communication device of any one of claims 98 to 107, wherein during the first handover procedure, a Secondary Cell Group (SCG) of the terminal device meets one of:
remaining unchanged;
being changed to another SCG other than a current SCG; or
being added with another SCG other than the current SCG.

109. A communication device, wherein the communication device is a secondary node and comprises:
a first receiving unit, configured to receive one or more secondary keys transmitted by a second master node, wherein the one or more secondary keys are associated with at least one candidate cell under the second master node, or the one or more secondary keys are associated with a target cell under the second master node, the secondary keys being used by the terminal device to communicate with the secondary node after performing a first handover procedure, the second master node being a master node to which the at least one candidate cell belongs, and the first handover procedure is a Master Cell Group Layer 1/Layer 2 Triggered Mobility (MCG LTM) procedure.

110. The communication device of claim 109, further comprising:
a second receiving unit, configured to receive fourth indication information transmitted by the second master node, wherein the fourth indication information is used for instructing the secondary node to use a target secondary key among the secondary key associated with the at least one candidate cell.

111. The communication device of claim 109 or 110, wherein the first handover procedure is used for performing cell handover between Central Units (CU).

112. The communication device of any one of claims 109 to 111, wherein during the first handover procedure, a Secondary Cell Group (SCG) of the terminal device meets one of:
remaining unchanged;
being changed to another SCG other than a current SCG; or
being added with another SCG other than the current SCG.

113. A communication device, comprising a transceiver, a memory and a processor, wherein the memory is configured to store a program, and the processor is configured to invoke the program in the memory, to enable the network device to perform the method of any one of claims 1 to 56.

114. A device, comprising a processor configured to invoke a program from a memory, to enable the device to perform the method of any one of claims 1 to 56.

115. A chip, comprising a processor configured to invoke a program from a memory, to enable a device on which the chip is mounted to perform the method of any one of claims 1 to 56.

116. A computer-readable storage medium having stored thereon a program that causes a computer to perform the method of any one of claims 1 to 56.

117. A computer program product comprising a program that causes a computer to perform the method of any one of claims 1 to 56.

118. A computer program that causes a computer to perform the method of any one of claims 1 to 56.
